(19)

Europäisches
Patentamt
European
Patent Office
Office européen
des brevets

(11) **EP 4 273 326 A1**

(12) **EUROPEAN PATENT APPLICATION**

(43) Date of publication:
**08.11.2023 Bulletin 2023/45**

(21) Application number: **22171946.1**

(22) Date of filing: **06.05.2022**

(51) International Patent Classification (IPC):
**E02B 17/00** (2006.01)　　**F03D 13/20** (2016.01)
**F03D 13/25** (2016.01)

(52) Cooperative Patent Classification (CPC):
**F03D 13/22; E02D 5/523; E02D 5/58; E02D 7/28;
E02D 27/425;** E02B 2017/0091; E02D 15/08;
E02D 27/525

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Optum Computational Engineering
ApS
2400 Copenhagen NV (DK)**

(72) Inventors:
- **Krabbenhøft, Jørgen
  2400 Copenhagen NV (DK)**
- **Krabbenhøft, Kristian
  2400 Copenhagen NV (DK)**

(74) Representative: **Manitz Finsterwald
Patent- und Rechtsanwaltspartnerschaft mbB
Martin-Greif-Strasse 1
80336 München (DE)**

(54) **FOUNDATION FOR A SUPERSTRUCTURE, PARTICULARLY FOR A WIND TURBINE, WIND TURBINE WITH THE FOUNDATION, METHOD OF FORMING A WIND TURBINE FOUNDATION**

(57)　　A foundation (10) for a wind turbine (1) comprises a single vertical subterranean pile (11) formed at least partially with one or more precast segments (65) that comprise reinforced concrete, a plurality of tendons (64) each spanning in circumferential or in vertical direction of the foundation across two or more segments (65), and on its top a connector (12) for a superstructure, particularly a wind turbine component (2-4), particularly for a wind turbine tower component or for a yaw controller.

Fig. 1

**Description**

The invention relates to a foundation for a superstructure such as a wind turbine, a superstructure having such a foundation, and to a method for forming a superstructure foundation. The wind turbine may be for generating electric power from harvested wind energy.

Forming foundations for wind turbines is a special field of civil engineering in that wind turbines are subject to a set of particular constraints:
Wind turbine structures tend to get taller and taller as the rotor diameter and thus the power of the wind turbine - and thus also its hub height - increase. The effect of this is that both wind force exerted on the wind turbine and the leverage on which said forces act at ground level increase so that, all together, the moment that acts on a wind turbine foundation and that has to be absorbed by said foundation increases more than linearly with increasing wind turbine power.

For forming foundations, very different approaches are known depending on whether a wind turbine is built on-shore or off-shore. Off-shore construction has its own difficulties, but is easier insofar that both prefabricated large structures and large machinery necessary for deploying them can relatively easily be brought to the worksite by specialized ships and rigs. In contrast, on shore wind turbines require land-based manufacturing and transport, and insofar the sizes of both machinery and components are limited by considerations on what can reasonably be carried along existing infrastructure, keeping in mind that sometimes mounting sites lie in pathless areas. Vice versa, the closer wind turbines need to be built to places where humans live, work or pass, the more constraints regarding noise, vibrations, environment, ground water and the like during construction need to be considered. Particularly, transportation limits the size of machinery and prefabricated components that can reasonably be brought to a construction site.

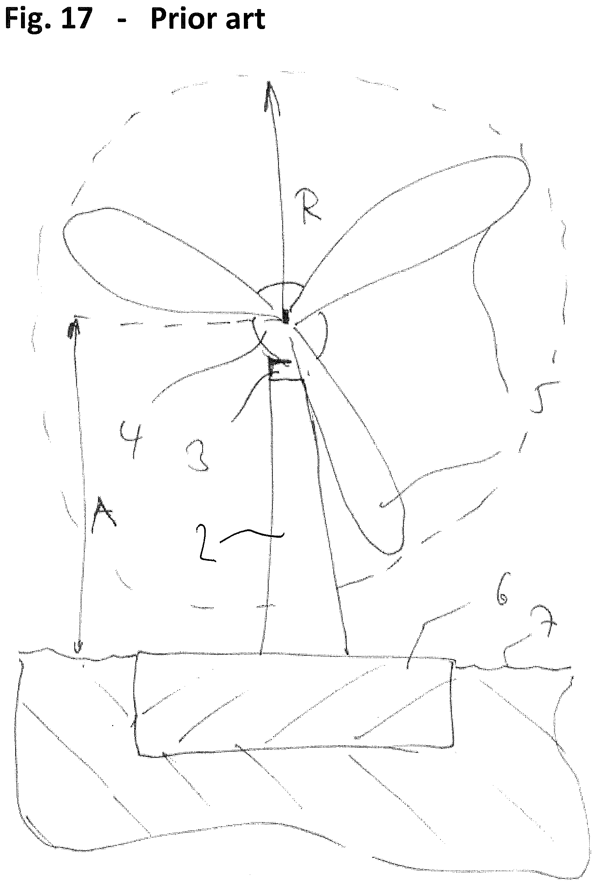

Fig. 17 shows schematically a known onshore wind turbine foundation 6. 1 is the wind turbine. It comprises rotor blades 5, usually three of them, a hub 4 that includes a generator, a yaw controller 3 allowing the orientation of the rotor towards the wind direction, i.e. allowing turning the rotor around a vertical axis, and 2 is a tower that provides the distance of the hub 4 from ground level 7. The distance of the hub 4 above ground 7 is symbolized with arrow A. In modern wind turbines, it may be more than 100 m or more than 150 m. The length of the blades defines the radius R of the rotor. The radius R nowadays easily exceeds 50 m or 80 m.

A known foundation for such wind turbines 1 is symbolized with 6. For onshore wind turbines it is in most cases a voluminous and heavy slab of concrete, reinforced by steel rebar. In horizontal direction, it may be relatively wide. The width may exceed 20 or 30 m. The general approach is that the founding slab 6 is heavy enough to withstand bending moments exerted by the wind turbine onto the foundation 6.

The advantage of this foundation concept is that fresh concrete can relatively easily be transported to the mounting site in arbitrary quantities. As the slab 6 does not reach far into the ground, it can easily be formed, usually using formwork or the like. The disadvantage, however, is that enormous quantities of concrete and correspondingly reinforcing steel are needed. This, in turn, requires tremendous logistics for bringing the material to the site. Different from many other concrete structures, wind turbine foundations face the problem og highly dynamic loads coming from the dynamics of the rotor as well as dynamic loads from environmental loads such as wave loads offshore and wind loads from different directions. The consequence of the dynamics load is that fatigue, effectively determined by the magnitude and number of stress cycles, is design driving component.

For offshore wind turbines a concrete slab is also sometimes used. In cases where the water depth, typically not deeper than 60 m, allows for it, a foundation formed as single hollow tubular steel structure is either driven or drilled into the ground and finalized with its top ending some meters above sea level where the wind turbine structure is connected typically with a bolt flange connection. The dimension of the tubular steel structures may well be 100m in length, a diameter of 10 m and a wall thickness of 100 mm and a total mass of 2000 tons or even more. As the water depth increases, the dimensions also increase. Producing steel tubular structures with these dimensions increase the complexity in production and price, which may limit the use of these foundations for deeper waters.

Known documents are EP3333324A1, WO2012/146350A2, WO2017/045907A1, WO2017/203023A1, WO2020/207903A1, CA2998534A1, US2374624, US5586417A, EP 2500473 A1, EP 2930275 A1.

It is the object of the invention to provide a superstructure foundation and a method for building it that can efficiently be deployed both on-shore and off-shore and that requires reduced amounts of material.

This object is accomplished by the features of the independent claims.

A foundation for a superstructure such as a wind turbine comprises a single vertical subterranean pile formed with segments of precast reinforced concrete, and on its top a connector for a superstructure or wind turbine component, particularly for a wind turbine tower component or for a yaw controller. The pile may comprise a plurality of tendons each spanning in circumferential or in vertical direction of the pile across two or more or all segments and possibly beyond. Reinforced concrete here addresses concrete structures provided with internal steel rebar or concrete steel.

The connector may lie subterranean or at ground level or above ground. The subterranean length of the pile may exceed 5m or 10m or 15 m and may exceed 20% of the hub height above ground of the planned wind turbine. It may be below 70 or 50 or 30% of the hub height above ground.

Thus, the foundation is an elongated structure that reaches into the ground. It is a single structure in that not multiple piles in parallel are built vertically into the ground. Only one pile is formed and designed to withstand the reasonably expected forces and moments. The elongated subterranean vertical structure is vertically long enough to constitute a long-term stable support for the loads exerted by the wind turbine as well as other environmental loads form wave, wind and earthquakes

The aspect ratio of the pile may be greater than 0,5 or 1 or 2 or 5 or 10. For offshore installations, it may exceed 2 or 5 or 8 or 10. The aspect ratio here is the ratio H/D where H is the subterranean length of the pile and D is the real diameter or an equivalent diameter. The equivalent diameter D is the diameter of an ideal pile with constant circular cross-section of same length and same volume as the real pile.

In certain layouts, the equivalent diameter of the cross sectional shape of the pile does not exceed 20% or 15% or 10% or 8% or 6% of the hub height above ground of the planned wind turbine.

The pile may have a cross-sectional shape in a horizontal cut that changes depending on vertical position. The local equivalent diameter $D_L$ (i.e. the diameter at a certain height position) is the diameter of an ideal circle with same cross-sectional area as the real cross sectional area of the pile at the considered height position.

A design made only in view of absorbing moments, however, renders the pile strongest/thickest where moments are greatest. This is usually a short distance below the surface, e.g. somewhere between 5% and 20% of the subterranean length H.

The pile may be a massive structure that is more or less completely formed by concrete and reinforced concrete. Reinforcement by steel may be partial and may be only in pile portions close under its surface, for example only in pile portions less than 50 or 30 cm under the pile surface, the other portions then being only concrete.

At least one inspection channel may be provided that runs along the length of the otherwise massive pile, preferably from its top down to the bottom. It may be a relatively small channel of appropriate cross-sectional size and shape. Its equivalent diameter, defined corresponding to what was already said above, may be less than 50 cm or less than 30 cm.

But likewise, the pile may be or comprise a structure surrounding at least a first cavity so that one can speak of an inner cavity and an outer wall. The wall is then made of reinforced concrete, possibly partially as said above also for the massive structure. The average thickness of the wall may exceed 30 or 50 or 80 cm and may be below 300 or 200 or 150 cm. The wall may comprise or be made of precast elements that may be formed as described down below this specification.

The first cavity may be empty or may be filled with material. The filling material may be earlier excavated ground or separately provided material or a mixture thereof. It also may comprise water, preferably ground water. Insofar, the first cavity may have one or more openings towards the surrounding soil. It may have one or more inflow openings for ground water at a lower portion of the cavity and may have one or more venting openings at upper portions of the cavity. With such a structure, concrete is saved compared to a massive structure, while weight of the structure is reasonably high.

The pile may have multiple separate cavities, possibly aligned along vertical direction. One or some of them, preferably the lower ones, may be filled and designed as described above. An upper one may be a storage for something needed or useful.

The connector may comprise an above-ground vertical continuation of the underground pile. It may be formed integrally with the underground pile. Particularly, the connector may comprise reinforced concrete portions that may be formed integrally with the reinforced concrete portions of the pile. These connector concrete portions may comprise or be made of precast elements that may be formed as described down below this specification It is, however, not necessary, although possible, that the underground profile is identically continued aboveground. The above-ground profile may be different from the underground profile and cross-sectional shape, and/or may change, possibly gradually. The above-ground height or above-sealevel height of the connector may exceed 5 or 10 or 50 or 150 m.

The connector may comprise connecting structures towards a wind turbine component. The connecting structure may, for example, comprise a crest of precisely positioned and oriented threaded bolts extending vertically upward out of the massive top surface of the connector. They may be designed and positioned to cooperate with corresponding structures of a wind turbine component to be mounted to the connector. This wind turbine component may, for example, be a tower component, such as a steel tube forming a part of the wind turbine tower, or may, depending on height of the construction, directly be the yaw controller of the wind turbine. The crest of threaded bolts may comprise a metal interconnection amongst said bolts and anchoring metal, the latter portions being immersed into the concrete so that only the threaded bolts protrude upward.

In this manner, the foundation can be used for easily continuing with forming the wind turbine tower by forming parts of it with the mentioned connector exceeding above ground.

But likewise, the connector may be at ground level so that other structures of the wind turbine, in this case tower portions, start at ground level for reaching upward. These tower components may be conventional metal tube-like structures that are appropriately attached to the connector. Again, they may, for example, have a crest of through holes at their lower surface designed to match the mentioned crest of threaded bolts. But the connector may also be made of, or comprise, concrete structures, possibly reinforced.

Various possibilities are given for forming the vertical pile of the wind turbine foundation. It may be formed by assembling prefabricated segments made of reinforced concrete. Each of the precast concrete segments may have vertical and hoop steel reinforcement. The concrete pile structure may have vertical channels for tools and/or ducts for tendons integrated into its body or walls. These segments may, amongst each other vertically and circumferentially be tensioned by appropriate means. The post tensioning is applied to secure that the concrete is in compression throughout its life and thus in fact has the characteristics of a tensionless pile - i.e. a structure that never experiences tension. The post tensioning provides stiffness of the vertical pile, reduces cracks in the concrete which will protect the steel rebars and tendon cables or bars and ensures good fatigue resistance to the dynamics loads.

Likewise, the reinforced concrete may partially be built at the construction site itself by providing a hole corresponding to the desired shape, possibly providing formwork in it, forming steel reinforcement as required and then pouring concrete on it as required. When concrete portions are formed, vertical channels for tools and/or ducts for tendons can be formed by providing correspondingly dimensioned and placed ductwork prior to casting uncured concrete.

Also, part of the invention is a wind turbine having an above-ground wind turbine structure including a rotor, a hub including a generator, possibly a yaw controller and a tower, and a foundation as described above and in the following.

The described wind turbine foundation can be used both as an onshore or offshore construction. For onshore, the invention will be an effective substitute for concrete slabs, resulting in large savings of concrete and steel rebar. For offshore foundations the invention will be an effective and cheap substitute for steel tubular structures and will allow for production of larger foundations and thus being utilized in deeper waters without a large increase in production complexity and price. For either case the manufacturing process of precast concrete segments is a relatively simple one. It allows establishing a temporary production facility in the vicinity of the deployment site which reduce transportation costs and also enables local production.

A method for forming a wind turbine foundation comprises the steps of deploying an underground pile with reinforced concrete segments, post-tensioning said concrete segments and forming a connector on the top of the pile. The pile may comprise or be made of precast elements that may be formed as described down below this specification

Other possibilities and more detailed explanations on methods for forming the pile will be given further down this specification.

In the following, features of the invention are explained with reference to the drawings in which

Fig. 1        shows in combination features of the wind turbine foundation,
Fig. 2        shows in combination features of a wind turbine foundation,
Fig. 3        shows in combination features of a wind turbine foundation,
Fig. 4        shows features of a profile of a wind turbine foundation,
Fig. 5        shows a combination of features of the foundation,
Fig's 6A to K   show various types of segmented and possibly prestressed or post-tensioned constructions,
Fig's 7A to C   show segments and tendon provisions,
Fig's 8A to F   show profiles along the vertical direction,
Fig's 9A to F   show stages of a production method,
Fig's 10A, B    show features of a foot portion of a wind turbine foundation,
Fig's 11A to G  show upward connections of the foundation,

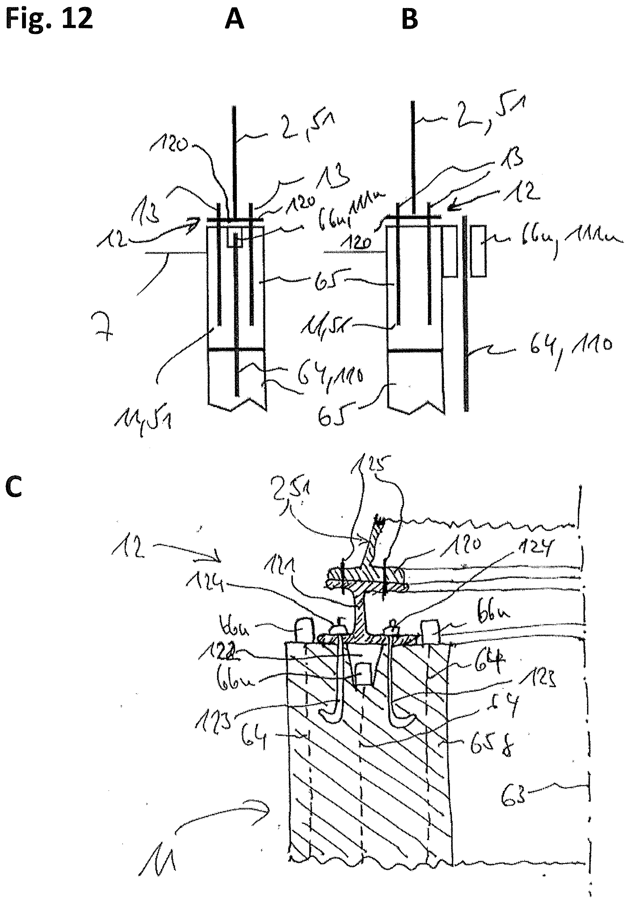

Fig. 12       shows connector features,
Fig's 13A to D  show pile foots of the pile,
Fig's 14A to C  shows formation features of the pile,
Fig's 15A to C  shows feature for U-tendons,

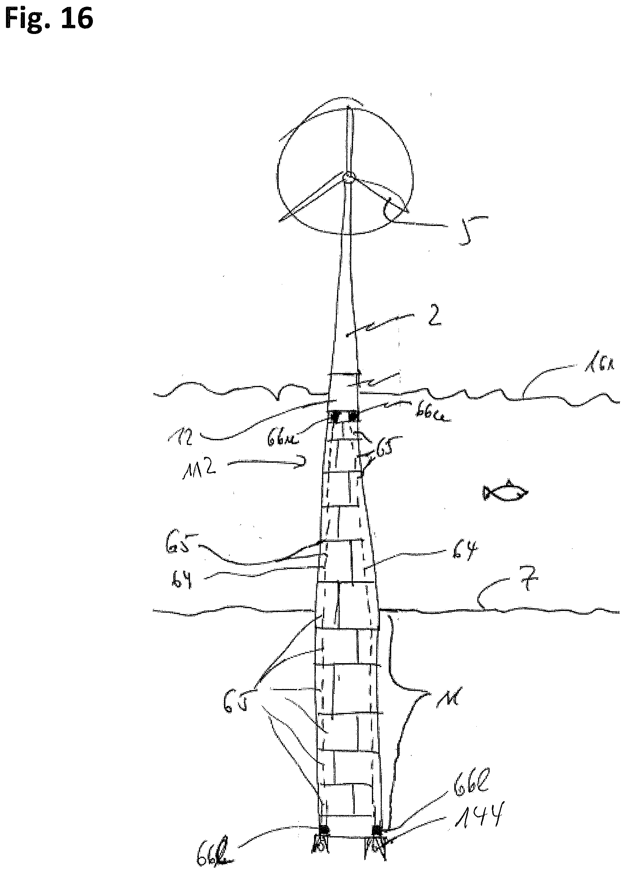

Fig. 16       shows an offshore installation, and
Fig. 17       shows a known wind turbine foundation.

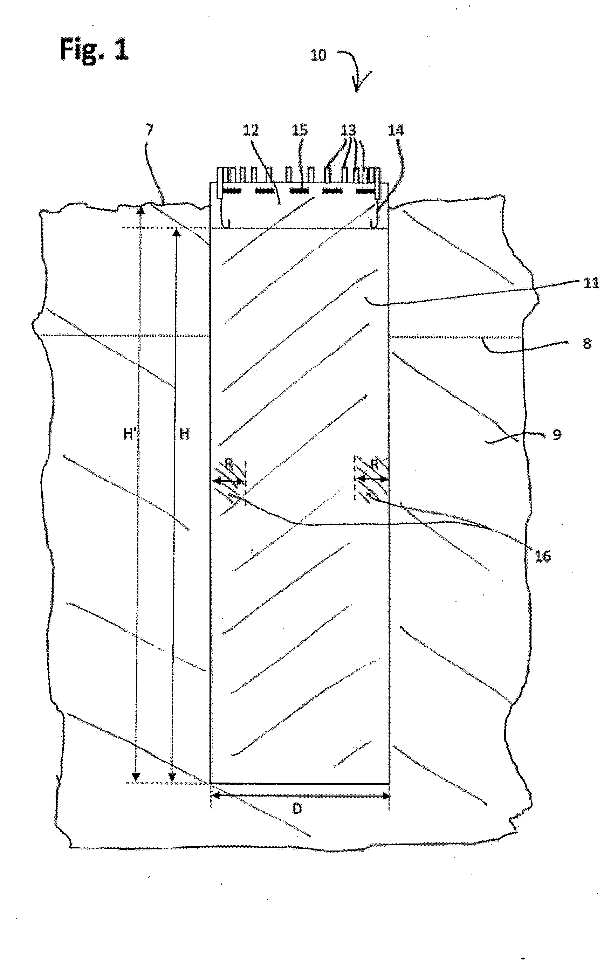

Fig. 1 shows as a vertical cross-sectional view a wind turbine foundation 10. It comprises a pile 11 and on its top a connector 12. The pile in Fig. 1 is shown, in the represented cross-sectional plane, with constant measures corresponding to a diameter D. The cross-sectional shape in horizontal direction may, in fact, be circular or polygonal, possibly shaped by formwork when forming the pile or resulting from the shape of pre-cast segments used for assembling the pile. 9 symbolizes the surrounding soil, 7 is ground level. 8 symbolizes ground water level, thus showing that the pile may significantly reach into ground water.

The connector 12 is symbolized with a crest of threaded bolts 13 that may be arranged in a predetermined pattern to stick vertically out of the top surface of the massive portions of connector 12. The threaded bolts 13 may engage with corresponding mounting holes of structures to be attached. For example, a metal tube-like tower portion reaching vertically upward may have a correspondingly shaped flange and may be attached when having a pattern of corresponding holes that can be placed on the threaded bolts and be secured using washer and nuts. The bolts are symbolized with internal holding elements 14 by which the bolts or the crest of bolts as a whole are firmly anchored into the pile material, particularly cast into concrete. The bolts may be interconnected by some kind of rigid structure of, e.g., iron or steel, that may also be submersed in concrete. In fig. 1 it is symbolically shown by dashed line 15. But depending on the nature of the tower above the foundation, the connector may be formed differently. For the case of a concrete tower the bolts may not be needed. A concrete tower placed on the top of the connector may be held in place using tendons.

The subterranean length H of the pile can be defined to reach from its lower end up to ground level 7. For off-shore constructions, ground level means seabed level, if not said otherwise. The subterranean length H of the pile can also be defined to reach from the lower end up to the lower end of the connector 12, i.e. up to the lower end of the holding elements 14 made for holding the connecting means in said foundation. When, different from Fig. 1, these components end above ground level 7, the subterranean length H may reach from the lower end of the pile 11 up to ground level 7, as symbolized by H' in Fig. 1.

The diameter D is shown to be constant along the vertical length. In Fig. 1, the underground length is more than two times the equivalent diameter D. But the aspect ratio may, as said earlier, also be as low as 0,5 or above it and may also be above 3 or above 5 or 10.

In Fig. 1, the pile 11 is a massive structure. Not shown in Fig. 1 is the reinforcing steel and tendons, although they are present. The reinforcement may be homogenously distributed across the volume of the pile 11. But likewise, it may predominantly be provided in regions 16 under the pile surface of a width R below 50 or 40 or 30 cm, the other regions having less or no reinforcing steel. The tendons may extend in both a vertical and circumferential direction and may be post-tensioned with a tension force of such a magnitude that the concrete is practically always in its life in compression.

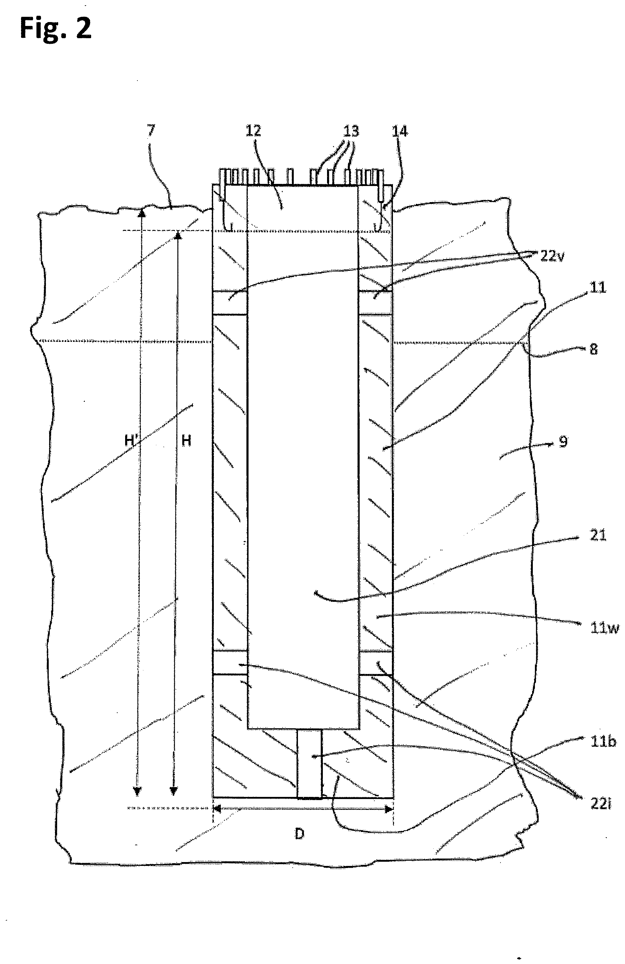

Fig. 2 shows a foundation in which same numerals and letters denote the same features as in Fig. 1. Different from Fig. 1, the pile shown in Fig. 2 is a hollow structure with a first cavity 21 in its interior. The pile thus has surrounding wall portions 11w and also may have a bottom portion 11b. The wall may be of a thickness below 300 or 200 or 150 cm. The thickness may be above 30 or 50 or 80 cm. The wall 11w may be formed with reinforced concrete.

The wall 11w and/or the bottom 11b may have inlet openings 22i for allowing ingress of ground water, possibly in lower wall portions or in the bottom, and vent openings 22v allowing the exit of air. At least one of the inlet openings may be positioned below ground water level 8. Different from what fig. 2 shows, no bottom wall 11w needs to be provided at the lower end. The pile 11 is then an open tube at its lower end. It may or may not have a horizontal cover at its top.

The cavity 21 in Fig. 2 is symbolized empty. It may be a continuous hollow throughout the pile. But it may be filled with heavy material. It may be filled with the material obtained when digging the hole. Or it may be filled with other, possibly heavier material. And through the holes, ground water may enter so that weight is increased or lift is reduced. Filling may be made practically concurrently with forming the pile or thereafter.

The cross sectional shape of the pile may be circular or oval or rounded or regular or irregular polygonal.

Fig. 2 shows one large cavity 21. But instead, two or more of them may be provided, vertically stacked and/or horizontally juxtaposed. Lower ones may be filled as described. Upper ones may be a storage and may be accessible for humans.

Generally speaking, the pile 11 has a certain diameter D and a certain subterranean height H. On ground level, the diameter D may correspond to the widthwise dimension of the supported super-structure, such as a wind turbine tower or a connector thereof. If the formed pile is not circular, its diameter D on ground level may be an equivalent diameter of an ideal circle of same area as the cross sectional area of the formed pile on ground level.

Depending on a variety of circumstances, the height H of the pile, and thus the ratio H/D, may span a wide range. If the cross section varies along the height, the ground level diameter D may be taken here or an equivalent diameter of an ideal column with circular cross section of same height H and same overall volume. Said circumstances are, for example, the quality of the surrounding ground, the expected load and load variability, off-shore water depth, particulars of off-shore or on-shore deployment, safety considerations and static margins, legal requirements and others. In view of all said circumstances, H/D may range from 0.5 to 12.

For a value of 0,5, the pile 11 is shorter (in vertical direction) than wide (in horizontal direction). This may, for example, be suitable for a very rigid ground, such as rock bed, receiving the foundation. The other extreme value 12 may be used, for example, for an off-shore deployment in sandy seabed. For regular on-shore foundations, a H/D value of at least 1 or 2 may be chosen, and possibly below 10 or 8. The same subterranean lengths apply for offshore foundations

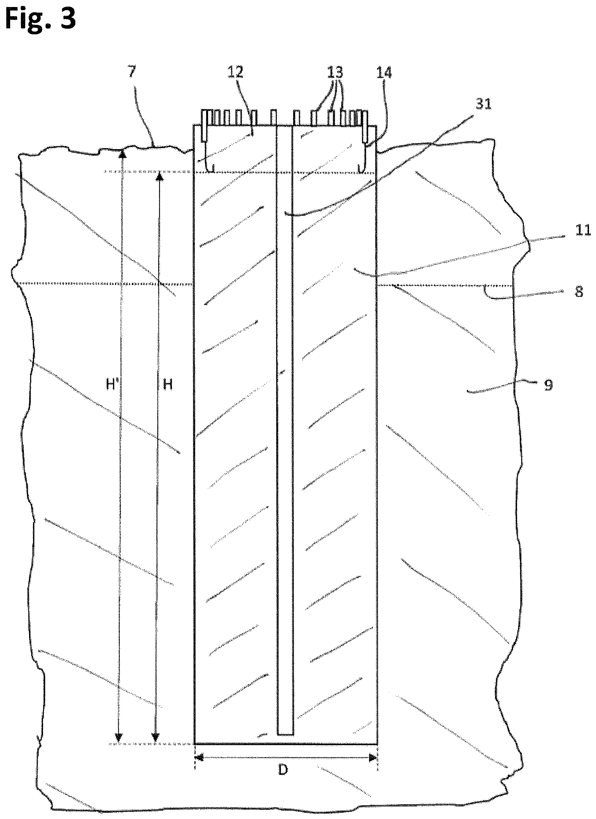

Fig. 3 shows a construction in which the pile 11 is massive, but has an inspection channel 31. It may reach from its top towards its bottom. The bottom of the channel may be closed for avoiding free ingress of ground water. The channel 17 may be of appropriate cross-sectional shape and size. Its equivalent diameter may be below 50 or 30 cm. It may follow a straight line or may follow a bent line. It may pass through areas of different radial position for allowing the inspection of different radial positions of the pile, and may thus pass obliquely through the pile.

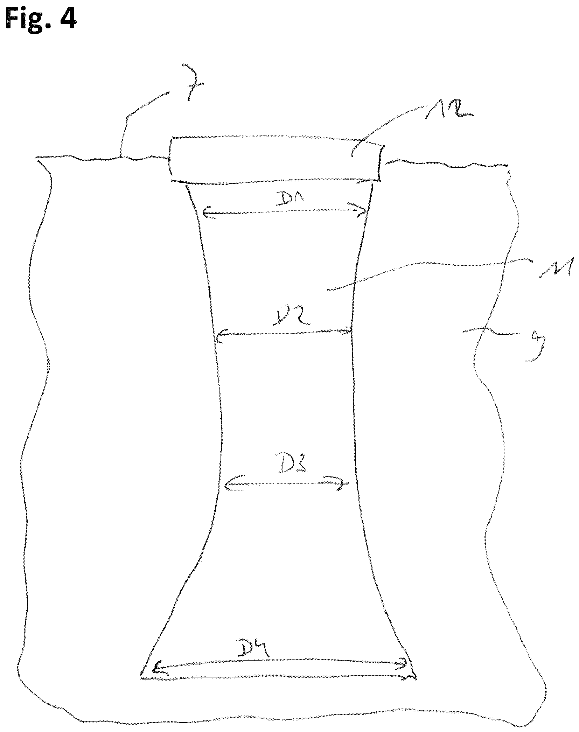

Fig. 4 shows an embodiment of the foundation with a profiled pile 11. It is shown with different actual diameters or equivalent diameters D1, D2, D3 and D4 at vertically distant positions. These diameters are different from each other and correspond to different cross-sectional dimensions and areas along the height of the pile 11. One of the lower diameters, for example the lowest D4 in Fig. 4, may be larger than one or some or all of the upper diameters, particularly diameters D2 and D3 at intermediate height in Fig. 4. With such a construction, the pile claws with its lower portions into the surrounding ground 9. The largest diameter may be more than 1.5 or 2 or 3 times the smallest diameter.

The outer shape and/or the wall thickness of the entire pile or at least of an upper portion of the pile, e.g. at least the top 50%, may be profiled in vertical direction as indicated by moment considerations. The profile dimensions considered here may be wall thickness and/or overall diameter of the pile, depending on height position. Moment is usually highest at or somewhere below ground level. Thus, in this area in vertical direction wall thickness and/or pile diameter may be highest. These measures may become smaller in a downward direction.

Different from what figures 1 to 4 show, the connector 12 may reach upward beyond ground level 7. A connector height B may then be defined from the upper end of the massive connector portion down towards ground 7. The pile height is from the piles 11 lower end up to ground level. The connector may then form a transition piece112 between the subterranean foundation pile 11 and the wind turbine tower 2 or other structure to be connected to the connector 12. The transition piece112 must carry forces and moments and may be a dimensional adapter and may accommodate technical installations.

Fig. 4 shows a waisted profile of the pile. But likewise, the profile may exhibit constant measures along the vertical direction as shown, e.g., in fig. 2. It may also converge in downward direction, either gradually or stepwise.

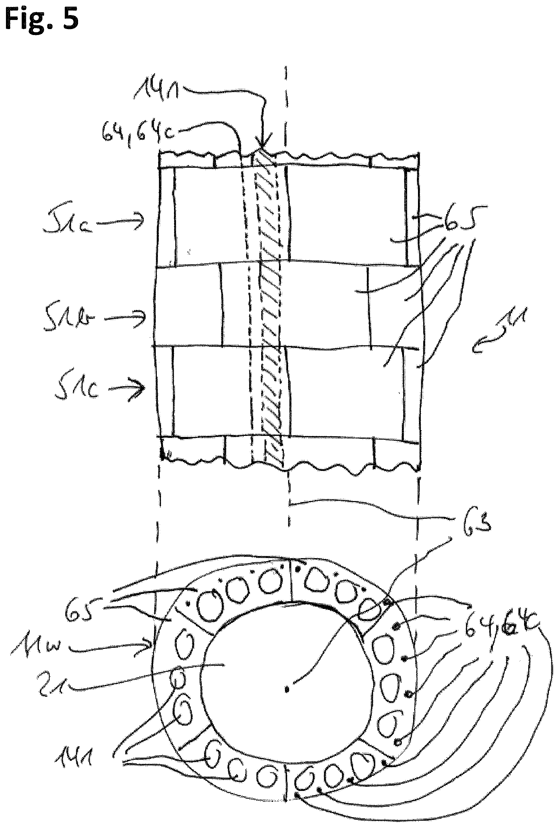

Fig. 5 shows various features of the invention in combination. Each of these features may be provided, but needs not be provided. Fig. 5 shows in its lower representation a plan view of a horizontal cross section of the pile or tower. The upper representation shows a corresponding side view.

The outer contour of the horizontal cross section is shown circular. But generally, it may be rounded, oval, or polygonal or irregular. Details will be described later.

The pile is not massive, but is formed by a closed wall 11w surrounding and confining a volume that may finally be a cavity 21.

The pile 11 is made up by segments 65 that are independently manufactured and assembled when building the foundation. The segments may also be assembled remote from the construction site and may be brought to site as a single assembled unit. It may include providing tendons and post-tensioning them. This approach may be chosen for off-shore constructions where vessels are built for carrying and handling significant portions of a pile or the entire assembled pile. The segments 65 may be made of concrete, preferably reinforced concrete. Some or all of the segments 65 may be of essentially same outer shape and dimension. Segmentation may be made in circumferential direction, leading to horizontally adjacent segments. Instead or in addition, segmentation may be made in vertical direction, leading to vertically stacked rings 51a,b,c, each possibly formed by segments 65. Details will be described later.

The pile body, particularly the walls 11w thereof and particularly the rings 51a,b,c and segments 65, may be tensioned by tendons 64, possibly running in tendon ducts 64c or running outside the pile body or wall 11w or segments 65. The tendons 64 may be post-tensioned. The tendons may run vertically and/or in circumferential direction. Plural of them may be provided, possibly also plural of them per segment 65, distant from each other in circumferential direction. The tendons 64 are held by anchors not shown in fig. 5. Neighbouring tendons may also be connected at corresponding ends, e.g. respective lower ends, to U shape so that the U bend forms an anchoring portion for the two connected tendons and true anchors are provided only at the upper leg ends of said U. Details will be described later.

The pile body, particularly the walls 11w thereof and particularly the segments 65, may comprise vertically running channels 141 suitably sized for tool deployment and material removal when building the foundation. When formed of segments 65, each segment may have one or more such channels 141. Dimensioning and positioning is such that after assembly of the segments 65 the individual parts of the channel 141 register to form a vertical continuous channel. The upper representation of fig. 5 indicates by the hatched region the internally running channel 141. Said channels 141 may finally also serve as tendon ducts 64c. Generally speaking insofar, a multitude of channels 141 extends vertically from the pile foot 144 upward towards an upper pile portion and preferably up to the pile top. Said channels 141 are dimensioned and arranged for allowing during construction the lowering of material removing tools 137, 139 through them down to the pile foot 144 and for allowing removing material through them in an upward direction. Details will be described later.

In view of the above, a possible feature combination is a foundation 10 for a wind turbine that comprises a single vertical subterranean pile 11 formed at least partially with one or more precast segments 65 of reinforced concrete. On the top of the pile, a connector 12 for a superstructure, particularly a wind turbine component 2-4, particularly for a wind turbine tower component or for a yaw controller is provided. The feature combination may have one or more of the further features described in this specification.

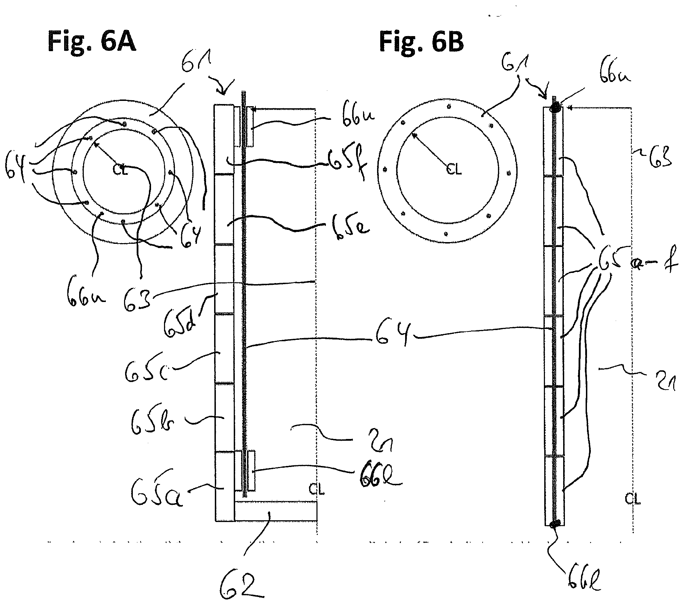

Figures 6A-H show embodiments employing prestressed or post-tensioned concrete. They comprise schematic representations not to scale as partial vertical cuts of a pile assumed to have a cavity 21 confined by walls 65 corresponding to wall 11w in fig. 2. 63 is a virtual center line of the pile somewhere in its middle. Figure 6A shows the structure only to the one side of the center line 63. Post-tensioning of the tendons may be in vertical direction by providing related tendons 64 and their anchoring and tensioning mechanisms 66. The anchors 66 are attached to the concrete structure in suitable manner for carrying the post-tensioning forces and minimizing relaxation of the post-tension . The upper anchor 66u and/or lower anchor 661 may have a stress applying means for applying stress on the tendon or at least for supporting this. They may be formed and built and positioned to allow also later re-tensioning the tendons. When the pile 11 is formed with segments 65, a tendon may span across multiple segments 65 in vertical and/or circumferential direction. Multiple vertical tendons 64 may be provided along the circumference, such as at least 4 or 6 or 8 or 10 or 20 or 50. The tendons 64 may be single wire tendons or multi wire tendons, typically with a tensile strength above 1500 MPa. The tendons may also comprise of individual bars typically with a tensile strength above 1000 MPa. The bars may be connected with couplers for increasing their length and provided with end plates at both ends for transferring post-tension loads to compressive concrete stresses.

Figure 6A shows in plan and side view one of possibly multiple tendons 64 running outside the concrete wall 61 in the interior of the pile 11. This arrangement is particular favorable when the pile is hollow and the tendons can be installed and posttensioned after the installation of the segments with easy access from the interior of the pile. The tendon 64 then runs in the inside cavity 21 outside the pile material. It has an upper anchor 66u and a lower anchor 661.

Figure 6B shows in plan and side view one of possibly multiple tendons 64 running inside the concrete wall 61 of the pile 11. The pile may be hollow with walls 61 or may be massive. The tendons may run freely in prefabricated tendon ducts 64c into which the tendons 64 are inserted during or after installation of the segments 65 and then post-tensioned after installation of the final segment.

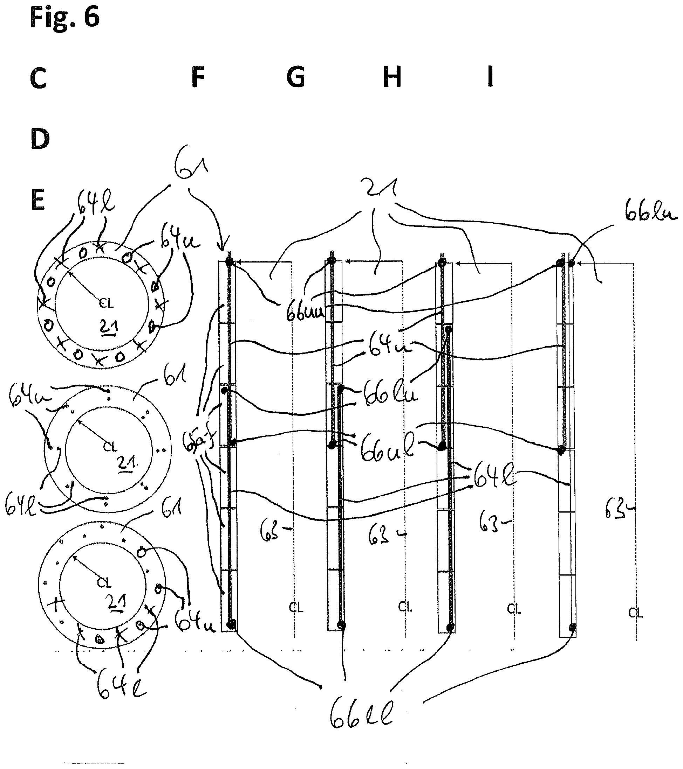

Figures 6C and F show in plan and side view that tendons 64 comprise upper tendons 64u with respective upper and lower anchors 66uu, 66ul for posttensioning an upper pile portion, and lower tendons 641 with respective upper and lower anchors 66lu, 6611 for post-tensioning a lower pile portion. This allows the use of qualitatively different tendons for upper and lower pile portions. In a middle portion, the upper and lower tendons 64u,l may overlap or be connected in some way, e.g. to common anchoring structures forming jointly anchors 66ul and 66lu. In circumferential direction, upper and lower tendons may be displaced against each other and may be provided alternatingly at possibly same radial positions.

When the pile 11 is formed with vertically stacked segments 65a-f, overlap of the tendons 64u,l may be in only one of said segments as shown in figure 6G. Such a segment 65 may then carry the upper anchor 66lu of the lower tendon 641 and the lower anchor 66ul of the upper tendon 64u.

Figures 6D and G show upper tendons 64u radially displaced at least in the overlap area against lower tendons 641. They may be at substantially same circumferential position.

Figures 6E and H show upper tendons 64u and lower tendons 641 overlapping over two vertically stacked segments 65a-f. The respective anchors are then provided correspondingly at or in different segments 65a-f.

Figure 6I shows that two kinds of tendons, namely shorter 64u and longer 641 ones, are mounted. They may both start, and thus have their upper anchor 66uu, 66lu, at the pile top. But they may reach differently wide downward. Shorter tendons 64u may end somewhere above the lowest fourth or in the middle third of the overall length of the pile 11 and may there have their lower anchor 66ul. Longer tendons 661 may end substantially at the bottom of the pile 11 where they have their lower anchor 6611. The circumferential and radial placement of these different kinds of tendons may be as shown in figures 6C to 6E. The different kinds of tendons 64u, 641 may have different strength. The shorter may be stronger. This arrangement corresponds to the observation that the moment acting on the pile 11 is highest in the upper third of the pile length so that there particular reinforcement by tendons is required.

Fig's. 6J and 6K shows schematically in side view and in plan view the use of overlapping vertical tendons 64 for forming and holding together pile subassemblies 69u, 691. Tendon anchors 66 are represented by black dots. 69u is an upper pile subassembly, 691 is a lower pile subassembly 69u. The two are formed individually and are each individually held together by respective individual upper and lower anchored tendons 64u, 641, and are stacked on each other.

The sub-assemblies 69u, 691 are held together amongst each other by intermediate tendons 64i that overlap the upper and lower tendons 64u, 641 and are anchored at lower portions 65ce of the upper pile subassemblies 69u and upper portions 65be of the lower pile subassemblies 691. Said lower and upper portions 65ce, 65be may be radial inward protrusions of the facing segments 65b, 65c of said subassemblies 69u, 691.

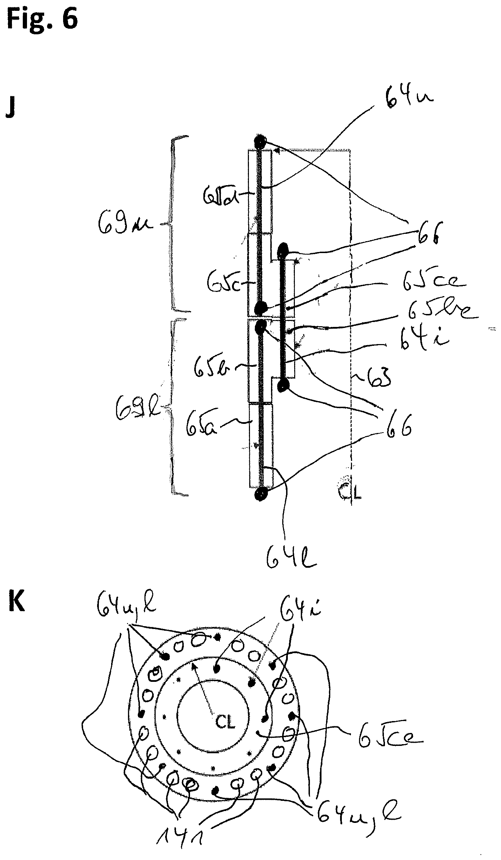

Where the tendons 64 overlap, they may be displaced in circumferential direction against each other or, as shown in figures 6J and 6K, in radial direction of the pile.

The subassemblies 69u, 691 may be individually assembled remote from the construction site, may be carried there and then stacked on each other and post-tensioned by said intermediate tendons 64i. They

Figures 6 show segmentations in vertical direction. The segments 65a-f may be ring segments of appropriate height, diameter and wall thickness. Each ring may also in circumferential direction be segmented. The segments may be made of reinforced concrete. The segments 65 may be pre-manufactured elements formed more or less remote from the mounting site and assembled at the mounting site. But likewise, they may be manufactured at or close to the mounting site.

Although figures 6 show vertical segmentation in conjunction with post-tensioned concrete, vertical segmentation may be made also without post-tensioned structures. Connection of the vertically stacked segments 65a-f may also be made by other appropriate mechanisms.

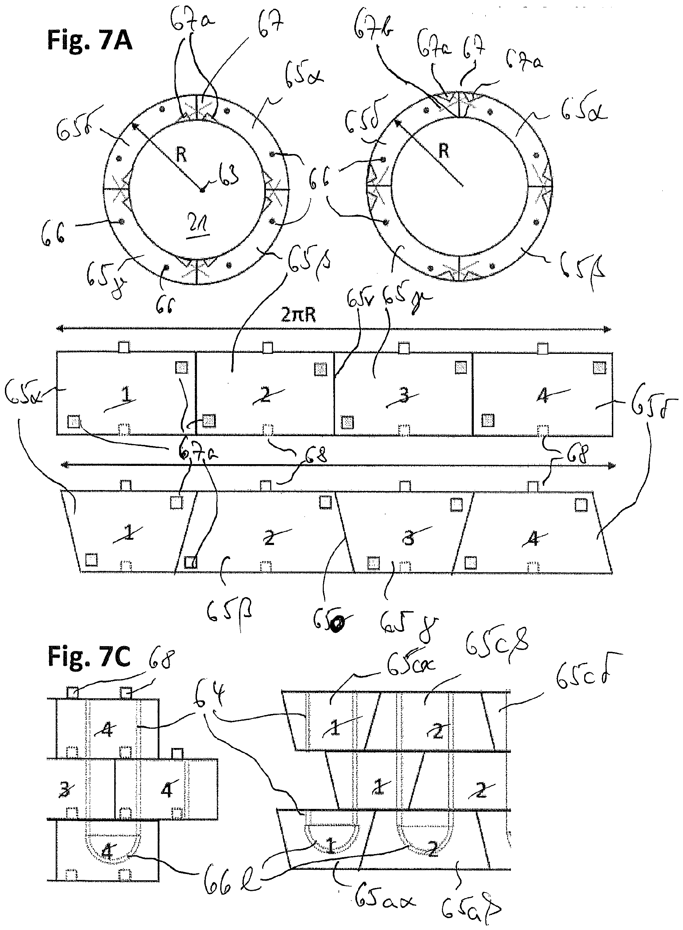

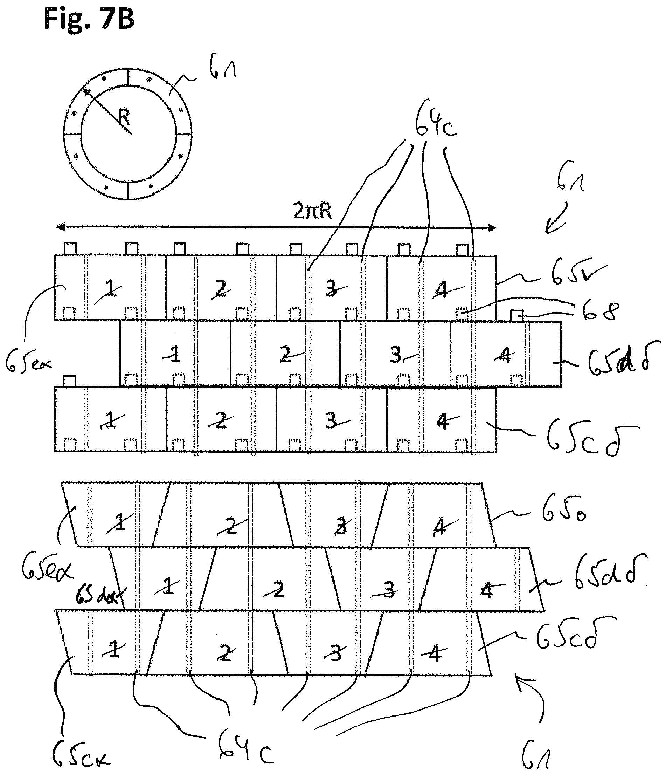

Figures 7A, B and C show further features of segmentation in vertical plan and uncoiled side view. Vertical and circumferential segmentation are shown in combination. A ring may be circumferentially segmented into multiple segments $65\alpha,\beta,\gamma,\delta$, each of said segments spanning a portion in circumferential direction. When cross section is - as an option - circular, each segment may cover a certain sector.

Segments may have tongue and groove structures 68 towards or amongst horizontally and/or vertically neighbouring segments 65. These tongue and groove structures 68 are pairs of matching complimentary concave and convex surface shapes at interfacing surface portions that facilitate positioning the segments 65 when mounting them.

Also horizontally separated segments require firm interconnections in circumferential direction. It is rendered by appropriate means. Possibly using frictional forces only between interfaces introduced by the tendons or other mechanical connection introducing a clamping force and compression stress in the interfaces. In circumferential direction, tensionable hoops or circumferentially running tensionable tendons or the like may be used. Or nut and bolt tensioning structures 67 may be used, utilizing structures that may, at least in parts, be cast into said segments 65. They may be accessible from the inner peripheral wall as shown top left of figure 7A or from the outer peripheral wall as shown top right of figure 7A. A bolt structure 67b may firmly be cast into a segment 65 and may protrude towards an opening of an adjacent, particularly horizontally neighboring, segment, from which it is caught and then fixed by a nut 67a.

The segment side walls may be vertical as shown at 65v, or may be oblique, as shown at 65o.

Fig. 7B shows segments from $65e\alpha$ to $65c\delta$. It shows that segment boundaries between horizontally abutting segments are displaced against each other seen in vertical direction, i.e. comparing different rings. It also shows schematically tendon ducts 64c formed in the segments 65 such that after their assembly these dutcs 64c register and allow threading in the tendons 64.

Fig. 7C shows an embodiment of tendon anchors 66, preferably used as lower anchors 661. The anchor 661 is a U-shaped connection portion amongst two horizontally displaced tendons 64. The U is also formed as a tendon duct 64c. This is well suited for bendable multiwire tendons 64. The tendon runs through the one tendon duct 64c from its top downward and through the U upward again in the connected duct64c until it surfaces at the top of said connected duct64c. The tendons are tensioned by their top anchors 64u.

When the cross section of the pile 11 changes along its length, the dimensions and/or the number of segments may change appropriately for rendering, when assembled, the targeted dimensions. This may lead to variable and potentially complex geometries of the individual segments 65.

Preferably, but not necessarily, no segmentation in radial direction is made. Then, one segment 65 spans the entire wall thickness in radial direction of the pile 11.

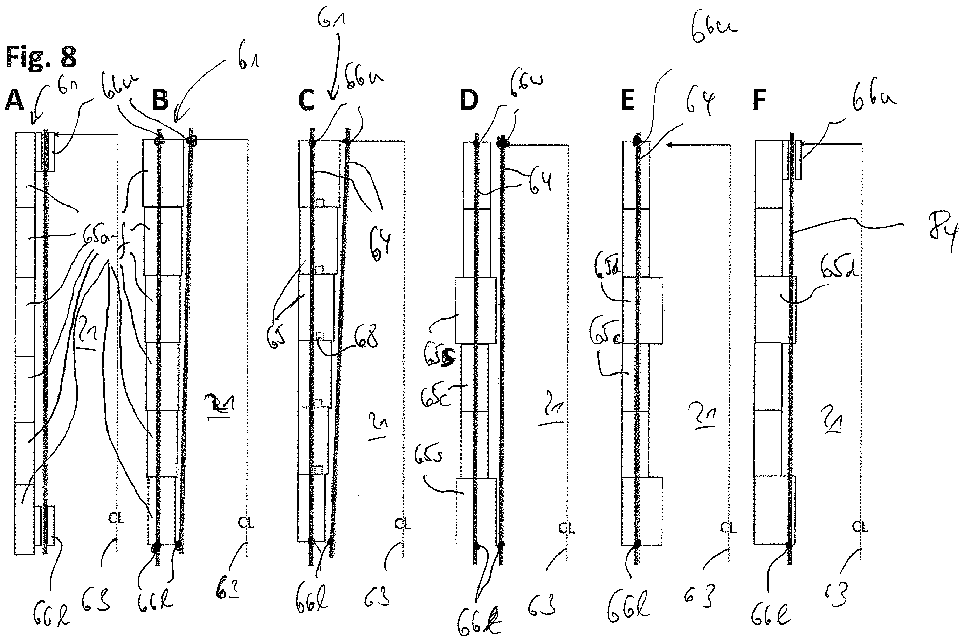

Fig. 8 shows segmented profiles and constructions of the pile 11. But the shown profiles may also be built when the pile is formed continuously and not by the use of prefabricated segments 65.

Fig. 8A shows a structure corresponding to that of figure 6A. Fig. 8B shows a structure in which tendons running inside the pile wall and other tendons running outside the pile wall 61 inside the interior of the pile, are used. Ring equivalent diameter and/or wall thickness increase in an upward direction, corresponding to the fact that a moment to be absorbed by the foundation increases in upward direction at least along the larger part of the pile. In fig. 8B, the individual rings have constant wall thickness (in radial direction), but different rings have different wall thicknesses. Fig. 8C shows a structure similar to that of Fig. 8B. But the outer diameter is constant, only the inner diameter decreases, and thus wall thickness increases, seen in upward direction. Fig. 8D shows a structure with outwardly protruding profile portions, such as a certain ring 65s of increased outer diameter. They constitute shear key portions with the surrounding soil. Protrusion height or diameter increase may be more than 5% or more than 10% of the adjacent outer diameter measure. Fig. 8E shows a structure with pile portions in vertical direction of enlarged wall thickness corresponding to a reduced inner diameter which may be favorable for reinforcing the pile in certain positions du to larger horizontal loads at specific positions. Other portions of the pile seen in vertical direction are of smaller wall thickness and correspondingly larger inner diameter. Fig. 8F shows a structure where a tendon 84 runs partially inside said enlarged wall thickness portion of the pile material, partially outside. Its purpose is to act as steering guide for the tendons placed outside the wall 61 inside the interior but also to reinforce the pile from lateral forces that may arise from a tendon that is not perfectly straight but follows a bent curve instead.

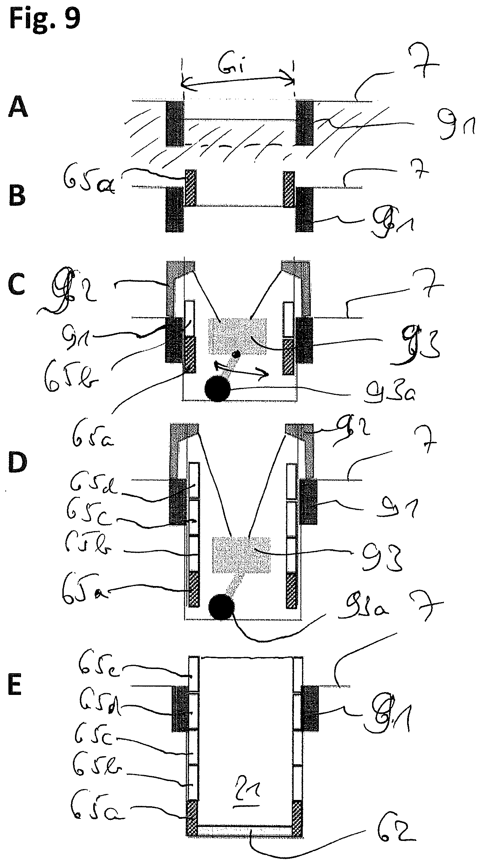

Fig. 9 shows stages of a method for forming a wind turbine foundation. It may be used for offshore construction and, preferably, for onshore construction. Generally speaking, it comprises the steps of deploying an underground pile 11 that may be at least half as deep as wide with reinforced concrete, and forming a connector 12 on the top of the pile 11.

Deploying the underground pile may be carried out in several different ways. One way is a method that comprises the following steps:

A. shown in fig. 9A: Forming a stationary ring-shaped guidance 91 with an inner measure Gi matching an outer measure of the pile 11 with a suitable gap between the two. It can be formed substantially on ground level and is massive enough for accommodating forces, carrying an auxiliary structure and providing guidance when a formed structure is lowered and possibly leans or abuts directly or indirectly against the guidance. It may be a ring of reinforced concrete with a thickness of at least 20 or 50 cm. Its height may be more than 50 or 100 cm or 300 cm. It may also comprise or be constructed as a temporary steel structure that is assembled in segments and allowed for dismantling after finalized pile installation.

B. shown in fig. 9B: A lowerable first ring portion 65a is disposed inside said guidance 91. It may constitute the lowest permanently remaining portion ("bottom ring") of the pile to be formed and will gradually be lowered in the subsequent steps. The bottom ring may have attached to it a steel cutting shoe which is fabricated with an overcut with the purpose of creating an void annulus between the outside wall and the ground that can be continuously filled with bentonite or polymers or other suitable material acting both as a lubricant and for stabilizing the ground. The material such as bentonite may be poured into the annulus from above or via a grout socket assembly either placed on the outside of the wall or inside the wall. The material may be curing and may solidify in suitably set time, the time being set in relation to the time it requires to form a ring segment of, or the entire, monopile. When the installation is done the grout socket assembly can be used for suppressing the bentonite with grout. Possibly said first ring portion 65a has already tendons 64 attached by appropriate anchors 661. Later, new rings or segments 65 may be threaded onto the already mounted tendons 64, e.g. by threading tendons through respective ducts 64c of segments 65 before placing them.

C. Then, an auxiliary structure 92, possibly jacking gallows or another lifting and pushing device, can be placed on said guidance 91. The bottom ring mat have appropriate anchors connected which are connected to the auxiliary structure 92 for controlling the vertical movement and verticality of the pipe. But instead of using the tendons 64, also other means such as chains or rod arrangements may be used for holding the formed structure and controlling its vertical position and movement. The following sequence C1 to C3 is repeated:

C1. shown in fig. 9C: Soil below the lowest = first ring portion = bottom ring is removed. The first ring portion may be held in its current position meanwhile by appropriate holding means. This removal may include removing soil surrounded by said ring portion in its current or in its next position.

C2. shown in fig. 9D : The first ring portion 65a and possible further ring portions 65b,c,... above it are jointly lowered to a targeted next position when soil has been removed as required.

C3. also shown in fig. 9D: A further lowerable ring portion (65b-f) comprising reinforced concrete is disposed on top of the already disposed lowerable ring portions.

D. shown in fig. 9E: Finalizing steps after the last lowering was made. The inevitable annulus between outer pile surface and surrounding ground may be filled by grout using the grout socket assembly starting from the lower ring and filling upwards . A bottom 62 of possibly reinforced concrete may be formed before or after the last lowering. The sidewalls may sit on said bottom 62 or may surround it. The tendons 64 may be fastened and tensioned at their upper anchors 66u. the tendons may also entirely be installed afterwards and then tensioned. The cavity 21 may be equipped and finished as required. It may be filled with material, such as excavated material or water, possibly ground water. The auxiliary structure 92 is removed. The guidance 91 can be removed or can remain.

C1 may comprise one or more of the following means or steps:

a. A mechanical grinder 93a, possibly mounted on a movable arm and operating from the pile cavity 21 and possibly held from an auxiliary structure 92 situated on said guidance 91, loosens soil below said lowest ring and from there radially inward. The loosened soil is then removed through the pile cavity upward by appropriate means. This may happen above or below ground water level.
b. Instead of a grinder, a spilling tool 101 may be used in loose ground. The spilling tool may be formed by, or fixedly integrated into, the lowest ring 65a of the pile, or may be a tool operated similarly to said grinder 93a. Spilling may be made by water or air or a combination of the two. It may be pumped and may thus be circulating ground water or separately provided water. The spilling tool may eject one or more jets of fluid or water or air under high pressure for loosening the ground hit by said jet. The pressurized fluid would come from a suitable pump.

A tool needed in above a. or b. may be held by and/or suspended from said auxiliary structure 92 guidance 91. It may abut itself against the inner walls of said guidance 91 or of the already made parts of the pile.

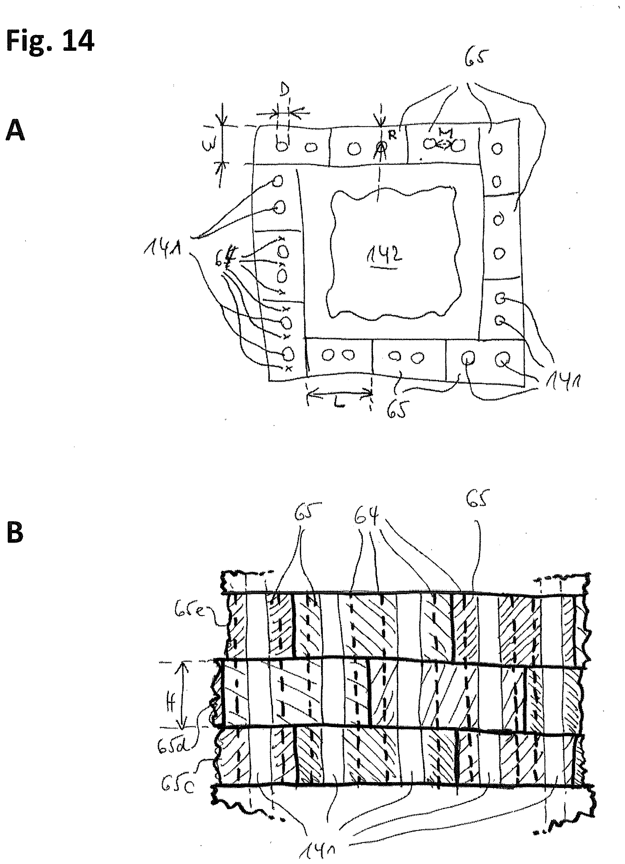

Instead of, or in addition to, using the cavity 21 as access, the channels 141 described with reference to fig. 14 can be used.

C2 may comprise holding the rings during soil removal in C1 and lowering them in controlled manner when removal is finished. Holding may be made with the already provided tendons or by separate structures with possibly using the guidance 91 as support. Lowering to the next position may be made by a controlled lowering using the holding structures, e.g. by giving out the tendons in controlled manner.

C3 may comprise the placement and assembly of prefabricated segments 65 or may comprise the formation of reinforced concrete wall portions in situ, possibly using formwork. It may comprise the installing or pre-installing of tendons 64 in appropriate manner, such as threading them through openings or ductwork. Thus, a ring structure may be made/manufactured/added to the possibly already existing structure.

In an embodiment, for example in solid rock, the pile 11 may be formed in situ. A suiting hole is formed beforehand. The pile 11 may be formed such that it grows in lengthwise, i.e. vertical, direction. It may be formed from reinforced concrete, preferably cast in situ, possibly with formwork at least on the radial inside walls.

Also in onshore installation, but preferably in offshore installation, prefabricated segments 65 may be assembled off-site, e.g. in a ship or on land, may also be tensioned there with tendons, are then brought to the site with a suitable machine or vehicle or by providing measures for buoyancy and tow ships, e.g. off-shore a ship or a barge, and are from there deployed into a suitably made cavity in the ground 7.

Generally speaking, removing soil and/or lowering pile structures may be assisted by vibrations introduced into the already deployed segment or by hammering.

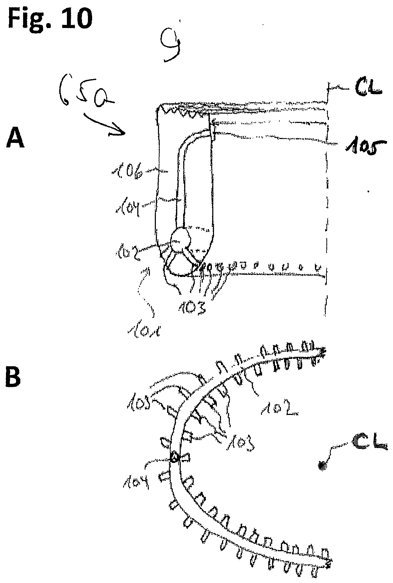

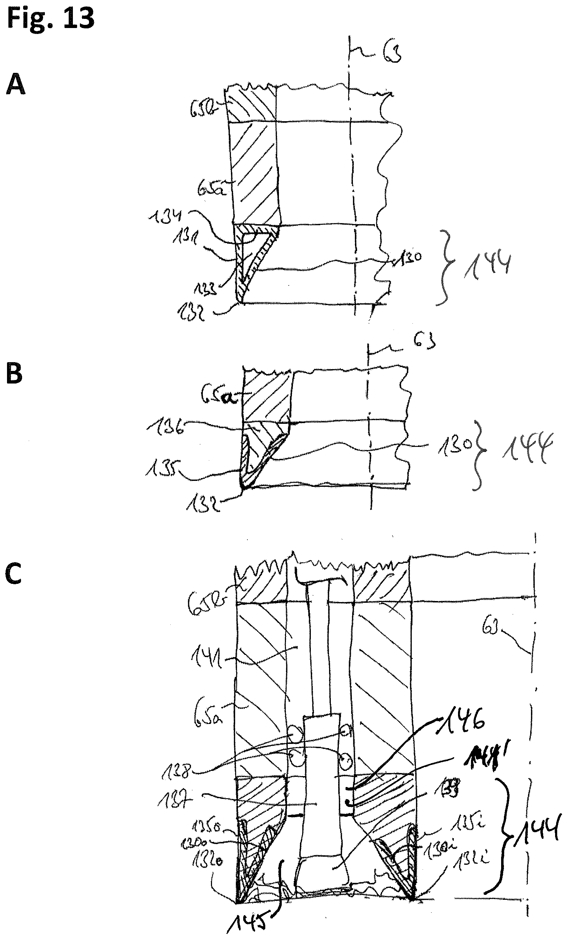

Fig. 10 shows schematically a spilling tool 101. It has a body that may finally constitute a permanent part of the foundation to be formed. The body may be ring shaped corresponding in shape, particularly diameter and/or in wall thickness to the ring geometry of the foundations lower portion. It may be ring 65a in fig. 9B. It may be made from reinforced concrete as its main bulk constituent 106. The lower surface may comprise additional reinforcement by steel plates or the like. Its lower surface may be rounded. The spilling tool 101 may be integrated into a pile foot 144 and may be combined with the features shown in figures 13A to D.

The spilling tool may be made up by circumferentially adjacent segments similar to what was said above on segments 65α-δ of a foundation ring. For the purpose of this description, a spilling tool may thus be a single-part ring or a segment thereof or multiple segments assembled into a ring. Such segments may have geometry and assembly features as described earlier and also in the following for segments 65α-δ.

A spilling tool 101 or each of its segments comprises said body and, preferably in its body interior, fluid channels 102, 103, 104 including at least one supply channel 104 with at least one accessible fluid connector 105 for connection towards a fluid source, and including multiple fluid outlet nozzles 103 reaching to the lower surface of the body of the tool 101.

The nozzles 103 may be distributed over the lower surface and/or along the length of the body of the spilling tool 101. Fluid from the supply channel 104 may be distributed to the nozzles 103 through one or more distribution channels 102. The fluid may be water. The fluid connector 105 may be situated at a vertical wall of the tool 101, preferably radially inside, preferably at an upper portion. Said channels 102 to 104 may at least in parts be a pre-shaped piping structure made of metal or some kind of resin and cast into the body bulk material 106 that may be concrete. The channels may at least in parts also simply be material voids in the bulk material 106. The nozzles 103 may be distributed around the ring circumference or along the segment length and may also point alternatingly in slightly different directions such as strictly downward and/or obliquely radially inward downward and/or obliquely outward downward.

Possibly provided and possibly seen as part of said tool 101 may be actuable fluid flow control means and their signaling and power supply and controller structures for allowing fluid flow control, e.g. for supplying fluid only to a selection of nozzles, for example to only those of a selected segment. Said fluid flow control means may be situated upstream of the fluid connector 105 and preferably outside the bulk material 106 or downstream thereof and then possibly inside said bulk material 106. The fluid flow control means may have a fluid inlet and multiple fluid outlets and may be configured to selectively fluid-connect said fluid inlet to a selected one of said fluid outlets, each of said outlets fluid-connected to a respective fluid connector 105, e.g. of a respective tool segment, or to a respective supply channel 104 or to a respective distribution channel 102or to a respective fluid outlet nozzles 103.

The fluid source may be seen as a part of said tool 101 and may be a pump, such as a water pump. It may be placed more or less remote from the tool body and may be fluid-connected to the fluid connector 105 or to a fluid inlet of said fluid flow control means with appropriate piping, ducts or hoses.

In operation, fluid from a fluid source is received in above C1b from the fluid connector 105 and distributed to the nozzles 103 from where it exits under suitable high pressure for spilling away ambient ground/soil. Fluid flow may be controlled by the mentioned fluid flow control means. The fluid source is preferably situated upstream of the fluid connector 105 and possibly upstream of said actuable fluid flow control means for pumping water taken from an external supply or from surrounding ground water. Fluid flow control may be made manual or automatically. As the tool spills soil away, the structure existing so far can be lowered, similar to what fig. 9D shows.

Material not accessible to the spilling tool 101, e.g. material radially inside the pile structure under construction, may be loosened and removed in other manner, such as conventional excavation with mechanical shovels, or may be sucked out from the pile center.

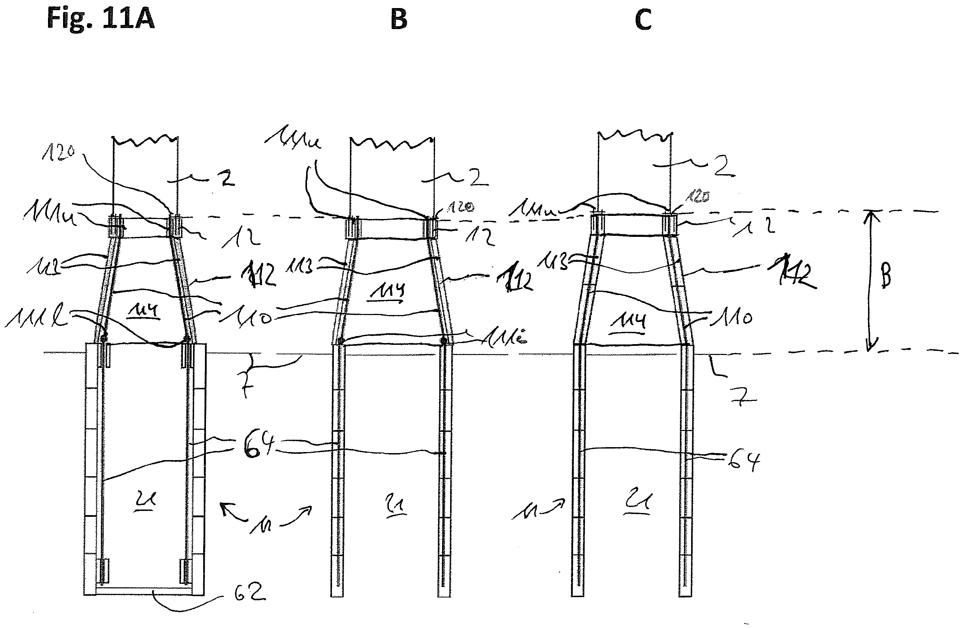

Figure 11 shows features of transition pieces 112. These transition pieces may be seen as a part of the described foundation and also as a part of the described connector 12. They extend vertically above ground level and connect between the actual foundation portion, the subterranean pile 11 and the actual wind turbine tower 2 or other tall structure.

The transition pieces 112 may be a structure with mesh-like force transmitting beams or with closed walls 113 confining an inner space 114. In many cases it will be of circular symmetry. It may change its cross sectional shape or area in upward direction. It may converge in upward direction. It may be made of metal, particularly steel, or of reinforced concrete or other suitable material.

The lower surface of the transition pieces 112 may essentially match the upper surface of the underground pile 11, 65. The lower surface of the transition pieces 112 may be placed on the upper surface of the underground pile 11, 65 and may be attached there in suitable manner, for example by multiple (not shown) bolts and nuts. In addition or instead, tendons 110 may be used. They may have upper anchors 111u at or close to the top of the transition piece 112 and lower anchors 1111 at or close to the bottom of the transition piece 112. When the underground pile 11 also has tendons 64, it is preferably that these underground tendons 64 connect straight or with minimum horizontal displacement to the tendons of the connecting piece 112 for avoiding zig-zag force transition.

Fig. 11A shows a transition piece 112 made of steel or of reinforced concrete tapered in an upward direction. Tendons 110 run outside the wall portions in the space 114. The lower anchor 1111 of these tendons 110 may be close to, and actually one piece with, the upper anchor 66u, 66uu of the subterranean tendons 64 which also run outside the pile wall 11w.

Fig. 11B shows a transition piece 112 similar to that of Fig. 11A. The design is that the tendons 110 are placed to approach subterranean tendons 64 running inside the pile wall 11w. Again, the lower anchor 1111 of the tendons 110 of the transition piece 112 may be close to, and actually one piece with, the upper anchor 66u, 66uu of the subterranean tendons 64.

It is pointed out that in figures 11A and 11B the subterranean tendons 64 and the tendons 110 of the transition piece 112 may connect directly and may be contiguous as one piece so that apart from slight bends due to geometrical transitions no zig-zag force transmittal occurs. But also in this case, a clamping intermediate anchor 111i may be provided at the transition from subterranean pile 11 to the transition piece 112. It forms at the same time the upper anchor 66u of the subterranean tendon 64 and the lower anchor 1111 of the tendons 110 of the transition piece 112.

Fig. 11C shows a transition piece 112 made of reinforced concrete. It may be made as explained for the underground pile 11 with the necessary adaptations for not lowering it and possibly having changing geometry in vertical direction. Tendons 110 run inside its wall 113 for registering with tendons 64 inside the pile wall 11w. Actually, they may be one piece. It may have no anchor at the transition from subterranean pile 11 to the transition piece 112 or may have an intermediate anchor 111i.

The live end of the tendons, i.e. the end at which they are tensioned and finally fixed, may be on ground level, i.e. at the upper anchors 66u of the underground tendons 64 and at the lower anchors 1111 of the tendons 110 of the transition piece 112. But instead or additionally, they may be at the lower anchors 661 of the underground tendons 64 and at the upper anchors 111u of the tendons 110 of the transition piece 112. The connection between the subterranean pile 11 and the transition piece 112 may be made with overlapping tendons using radially inward protrusions at the upper end of the subterranean pile 11 and the lower end of the transition piece 112 corresponding to what is shown in figure 6J.

As shown in fig. 12A and B, the lower end of the wind turbine tower 2 may be made of sheet metal and may have a flange 120 provided with holes matching positions of threaded bolts 13 of the connector 12. Fixation may be made with nuts (not shown) screwed on the bolts 13 for holding the flange 120. The subterranean tendons 64 upper anchors 66u may be disposed below the flange 120 as shown in figure 12A or may be sideways displaced against the flange 120 as shown in figure 12B so that the anchors 66u do not directly engage the flange 120. But likewise, different from what is shown, the upper anchors 66u may sit on the upper surface of flange 120 and thus also contribute to holding it down.

Fig. 12C shows the cross section through a pile wall 11w, 65 of the connector as the top end of the pile 12. The shown cross section may be through a precast upmost segment 65f having its main body made of concrete, possibly reinforced with steel. Multiple anchors 123 may be cast into the segment 65f and protrude upward from its upper surface with fixable ends, e.g. threaded ends. The anchors may have hook portions portion as shown at 14 in figure 1 that are cast into concrete for providing a good grip. The protruding end may be vertically straight. The hooks 123 are preferably regularly disposed according to a known pattern. An intermediate beam 121 such as a sideways lying U beam or H beam may be attached to the upper surface of segment 65f and held there by an appropriate connection, such as a threaded connection comprising nuts 124 threaded on the top ends of said hooks 123 that reach through corresponding holes of the intermediate beam 121, e.g. in one of its legs. The intermediate beam 121 may run around parts or all of the circumference of the pile. A flange 120 of the wind turbine tower 2 or of a transition piece 112 may be attached to the upper surface of said intermediate beam 121. Attachment may be made by welding or clamping or with sets 125 of bolts and nuts reaching through flange 120 and leg of intermediate beam 121.

The beam 121 may cover top anchors 66u of tendons 64, situated for example in corresponding recesses 122 of the top surface of the segment 65f. But likewise, the top anchors 66u of tendons 64 may sit sideways of the beam 21 on the segments top surface, or may bed attached sideways to the segment as shown, e.g., in fig. 6A. And further, the top anchors 66u of tendons 64 may also sit on a leg of the beam 121.

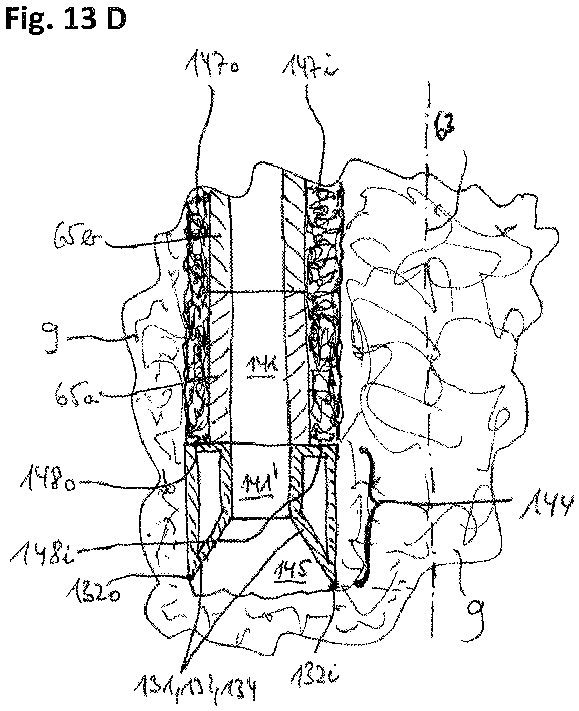

Figure 13 shows cross sections of pile foots, also called foot portions here, of the pile. The foot portion may be a separate structure or may be or comprise the lowest ring structure or segment(s) of the foundation pile 11 with some additional features. It may be suited for withstanding stronger and punctual mechanical impact when deploying the pile downward during its formation. It may have non-brittle reinforcement 131, 135 on at least parts of its outer and lower surface. The reinforcement may be or comprise metal plates, made of iron, steel or other suitable material. The foot portion may have a lower cutting edge 132 running around parts or all of the circumference or perimeter of the pile. Its circumferential shape may match that of the pile circumference or may show an overcut 148 compared thereto. The cutting edge may have a relatively sharp downward V-shape. It may serve to break solid obstacles and cut through harder remainders of soil.

Also such a foot portion may comprise a multitude of assembled foot segments to be mounted together in circumferential direction. The upper surface thereof matches the lower surface of a regular concrete ring 51 or segment 65a to be mounted thereon.

Fig. 13A shows a foot portion consisting of steel or iron plates of which two with a vertical extension meet at a lower vertex in V shape. The vertex forms the cutting edge 132. The radial outer plate 131 may run vertically or, the other 130 may run from the cutting edge 132 obliquely upward and inward. Mutual fixation at the cutting edge 132 may be welding or screwing or may be remaining after bending. The top may be capped with a horizontal plate 134 or with horizontal bars without creating a closed volume. The interior 133 may be empty or filled with solid material, possibly concrete, possibly reinforced.

Fig. 13B shows a foot portion consisting primarily of concrete, possibly internally reinforced, and having its lower portion V-shaped and reinforced with metal plates 135, 1330 of corresponding V shape at the outer and lower and oblique surface. Actually, the metal structure may be provided first, assembled or formed e.g. as said earlier, may possibly be mechanically contacted with internal reinforcement steel, may then be integrated into formwork for allowing casting then the segment or entire ring with concrete. Upper parts of the vertical or oblique wall may remain uncovered from outer reinforcing plates 135.

The foot portions shown in fig's 13A, B are intended to remain at the foot of the pile 11 after its formation. They may or may not count to the overall length of the pile. They may or may not be held by tendons. In other words, tendons 64 may be anchored at said foot portions or above them. If anchored in the foot portions, metal anchor portions may be attached to the reinforcement plates 131, 134, 135.

Fig's 13C and 13D will be explained later.

Opposite to what is shown in figures 13A, B, the diagonal surface may also point radially outward, the edge 132 then being displaced radially inward from the outer contour. And also different from what figures 13A, B show, the foot portion may also be formed from regular segments 65, as schematically shown in figure 6A. Likewise, the cutting edge 132 may, in top view, reside along its circumference radially outside the outer contour of the pile so that it cuts off somewhat more soil than geometrically needed for placing the pile. Said radial outside displacement of the cutting edge compared to the outer contour of the pile may be more than 2 or 5 or 10 cm. It may be less than 50 or 20 or 10 cm.

Fig. 14 shows several features in combination that may or may not be used in combination with each other and may or may not be used in combination with other features described so far.

Fig. 14A shows an overall cross section of the pile that is non circular. It is shown more or less square, but may be rectangular or triangular or hexagonal or octagonal or oval or irregular. It is shown to be composed of segments 65 that may at least in their outer shape all be equal to each other. Little x marks indicate - at only some segments - positions where tendons 64 may run.

141 indicate vertical channels piercing through the segments 65. They are dimensioned to function as an important or main and possibly sole tool access for material removal below the pile to be formed. Their diameter D may thus be more than 30 cm. For non-circular channel cross sections, the diameter D may be that of a circle of same area as the actual cross sectional area. They allow the vertical deployment from the top to the foot of the pile 11 of suitable tools such as a shovel, a dredger, a grinder, a drill, a spilling tool and the like. The channels 141 may also allow material removal e.g. by lowering through them suitable installations such as tools for spilling, suction, shovels, excavation, suitable conveyors or the like. The material to be removed may then be conveyed through said channels 141 upward. Material removal and lowering of the pile formed so far may be made stepwise alternatingly as explained with reference to fig. 9.

A segment may have one or two or three or more of such channels 141, displaced against each other in a lengthwise direction of the segment 65.

Fig. 14B shows that in stacked segments 65 their respective channels 141 register so that continuous vertical channels of practically constant cross section are formed. It also shows that in stacked segments 65 their respective vertical walls may not register but may be placed staggered. The overall geometry, however, is such that the channels register nevertheless along the vertical direction. Dashed lines show again a possible location of tendons 64. But tendons may also run outside the segments, as shown earlier in this specification.

In such an embodiment, excavation work or soil removal work may primarily or exclusively be made through these channels 141 with the effect that material in the interior of the pile, indicated by remainder 142, may remain without being removed. The channels are of suiting cross-sectional shape and dimension. Its cross sectional shape may be circular or round or oval or rectangular. Channels 141 may also be used in pile designs of other cross section than the square shown in fig. 14A.

Here, a method for forming a wind turbine foundation comprises the steps of deploying an underground pile 11 that may be at least half as deep as wide with reinforced concrete, and forming a connector 12 on the top of the pile 11, wherein preferably a pile with walls around a cavity 21 is formed, wherein the pile and preferably its wall has multiple vertical channels 141 that are used for tool access and for material removal. These method aspects are deemed combinable with the other method aspects described in this specification.

It is possible to use adjacent channels 141 for deploying alternatingly material-loosening tools or installations and material-removing tools or installations. For example, through one of said channels 141 a water-jetting tool may be lowered through one of said channels 141 that loosens ground below the actual foot position, initially possibly in a direction towards an adjacent channel 141. Through said adjacent channel 141, the loosened material is conveyed upward by suitable installations.

A lowerable water-jetting tool may have a fluid or water supply and one or more nozzles for ejecting pressurized fluid or water in suitable directions. The tool as a whole and/or one or more of its nozzles may be directable. The water-jetting tool may have a fluid or water ejection head rotatable around a vertical axis. It may be driven externally e.g. by a rod arrangement reaching downward through the channel 141, or it may be driven by the repulsion of water ejected through it with a horizontal directional component and at a position displaced against the turning axis.

Fig. 13C shows in cross section a foot portion 144 under one regular segment 65a where it is pierced by a channel 141. 137 is some kind of tool with a tool head 139 agitating the soil below it. The tool head 139 may be the head of a water-jetting tool as described above and may be rotatable against the body of tool 137. It could eject water obliquely downward from its periphery. The tool 137 is lowered through channel 141 by some kind of stiff guidance structure or slack suspension means. It may abut with possibly adjustable abutments 138 against the inner walls of channel 141. The pile foot portion 144 may also carry lower anchors 661 of tendons 65.

The foot portion 144 may again comprise reinforcements 130, 131, 134, 135 on its outer lower surface. It may have cutting edges 132i, 132o on both the radial inside and the radial outside surface, provided by a radial inside V-shaped reinforcement 135i and a radial outside V-shaped reinforcement 135o. These individual portions may be formed as explained with reference to fig. 13B or 13A. But likewise, the structure of fig. 13A or 13B may have in its respective oblique reinforcement 130 an opening registering with channel 141 for allowing the tool 137 to pass.

In fig. 13C, the segments 65a, b may be formed as said above, particularly having said channels 141. The foot portion 144, in contrast, may provide a circumferentially continuous ring space 145 towards its lower end face, sideways defined by the reinforcements 130o, 130i and open in a downward direction. The upper surface of the foot portion 144 may match the lower surface of the segments 65a. The foot portion 144 may have in its upper portion matching channels 141' matching those of segments 65. Land portions 146 in the upper portion of the foot portion keep together the radial inner and radial outer portions of the foot portion 144. Seen in a downward direction, the matching channels 141' yield into the ring chamber 145.

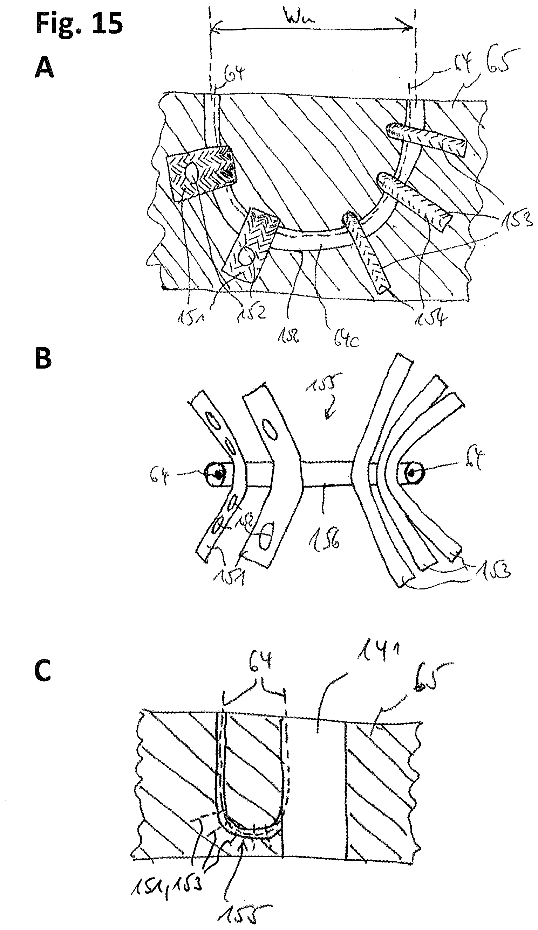

The circumferential outer contour of the foot portion, particularly the plan view contour of the outer cutting edge 132o, may coincide with that of the pile above it. But likewise, it may have an overcut portion 148 as shown in fig. 14D. The outer cutting edge 132o resides radially outward of the outer wall of the following pile structure, e.g for more than 2 or 5 or 10 cm and not more than 50 or 20 or 10 cm, leading to a radial outer overcut 148o. Then, said outer contour, particularly the cutting edge 132o, can cut off rigid soil portions with some distance from the following outer wall of the pile 11 so that a theoretically empty outer annulus between outer pile wall and surrounding ground 9 appears. If the radial inside material is not removed (see fig. 15), substantially same considerations apply for the circumferential inner contour of the foot portion, defined by inner cutting edge 132i, forming a radial inner overcut 148i that forms, in operation, a radial inner annulus. Said annuli support the sliding downward of the pile portions when lowering them during construction.

A pile foot 144 is seen as a separate claimable invention. It comprises an elongated, but not necessarily straight body shaped to follow along its length the perimeter of the lower end of a foundation pile to be formed. The body has at least one lower cutting edge portion 132o,i formed by metal or iron or steel plates of which two with a vertical extension meet at a lower vertex in V shape. An upper body portion has a surface or at least surface portions matching that of the lower surface of a lowest pile ring 51a, 65a.

The pile foot 144 may extend along the entire perimeter and form then a closed loop or may extend along one or more parts of the perimeter. The plan view contour of the cutting edge portion 132o,i is placed in accordance with the intended outer pile contour. The two may match, or the cutting edge may be placed with an overcut 148 compared to the pile perimeter. The pile foot may have upward pointing channel openings 141' matching channels 141 in the lower surface of the lowest pile ring 51a, 65a. The pile foot may carry or have attached or have integrated one or more lower anchors 661 for tendons 64. It may have one or more tendon ducts 64c. Plural partial pile foots each extending along a part of the pile perimeter or circumference may be assembled into a complete pile foot extending along a corresponding larger part of the pile perimeter or along its entirety. A pile foot may come integral with one or more segments 65a and may firmly be attached to its lower surface. The pile foot may have one or more of the features described for a foot portion with reference to figures 13A to D, figure 16 or in the other specification portions.

The foot portions shown in fig's 13C, D are intended to remain at the foot of the pile 11 after its formation. They may or may not count to the overall length of the pile.

During construction, the annuli formed by the pile foot overcut 148 between the surface of the pile wall 11w and the surrounding soil 9 may be filled with suitable filling material 147, 147o, 147i for hindering soil falling into the annuli and constituting some kind of lubricant. Such material 147 may be or comprise slurry and/or bentonite and/or some polymer. It may be designed to remain liquid and fluent or to be slow-curing. Then, when lowering the pile structure during construction as described above, said already present filling material 147 flows downward with the pile 11, and fresh additional filling material 147 may be filled into the annuli from the top.

At the very end, the annuli may be filled with curing material. It may be provided by supplementing components into the already present slurry and/or bentonite and/or polymer for starting or accelerating its curing. Likewise, the annuli may be filled with curing material, such as concrete and/or grout, possibly after non-curing material has been removed.

After deploying the pile, the channels 141 in said pile or pile wall 11w or segments 65 may be filled with curing material, such as concrete, possibly with reinforcement. Also the ring space 145 may be filled. Reinforcing steel may be put into said channels 141 from their top opening in suitable manner, and then fresh concrete can be poured onto it. Likewise, precast filling elements may be put into said channels 141 and only remaining space between said elements and may then be filled with fresh concrete. Said filling elements may have columnar shape of a widthwise dimension smaller than that of the channels 141 to be filled. Filling the channels 141 may be made before or after possibly provided tendons 64 are tensioned.

The side walls of the channels 141 in the segments or pile wall 11w may have gripping portions, such as one or more concrete protrusions and/or recesses from a cylindrical channel surfaces or protruding portions of reinforcing steel running otherwise in the segment 65 carrying the channel 141. Also the filling elements may have such gripping portions. Said gripping portions provide for a good and durable connection between said pile or pile wall 11w or segments 65 and said filling of said channels 141 once the volume is filled with concrete.

In case the channels 141 are finally filled with curing material, they may be filled such that a tendon duct 64c remains so that the former channel 141 of larger cross section has been reduced to a tendon duct of smaller cross section. Said duct may then house a tendon.

Fig. 15 shows optional features of U-tendons as addressed already in fig. 7C. Their U-turn serves as lower anchor 661 and may thus require reinforcement for withstanding forces from the tensioned tendons and for introducing these forces well distributed and balanced into the respective concrete segment 65. Such a reinforcement is shown in figures 15 A and B and is also seen as a separable, own invention. A tube like duct 156 forms the void through which the tendon finally runs. It has a U shape corresponding to the finally desired tendon U.

Said channel is connected to reinforcing elements 151 to 154 that may be connected to the radial inside of the U shaped duct 156 and may extend from there sideways.

The elements may be plate shaped elements 151, possibly provided with openings 152 and/or ribs 153 on them for rendering intimate contact amongst said plate elements 151 and the surrounding concrete when finally cast. The elements may instead be or also comprise rod shaped elements 153, also possibly provided ribs 154 on them for rendering intimate contact amongst said rod elements 153 and the surrounding concrete when finally cast. The reinforcing elements 151 to 154 may be bent pointing to the outside of the U as shown in fig. 15A.

The duct 156 may be of metal or iron or steel. The reinforcing elements 151 to 154 may be made of metal or iron or steel. They may be welded to the inside U surface of the duct 156 where they intersect. Fig. 15B shows the reinforcing U-structure 155 schematically in plan view. The duct 64c may also be made of light plastic material and may be designed to be squeezed off when the tendons are tensioned. The U duct 156 then only holds open the tendon duct 64c when casting the segment 65 and is a mounting aide of the reinforcing elements 151 to 154 which may be clipped to said duct.

The width Wu of the U may be more than 50 or 80 or 100 cm. It may be less than 200 or 150 cm, corresponding to the desired distance amongst tendons 64. The shape may be a very wide U with a substantially horizontally running bottom portion. Fig's 7C and 15A, B show the U within one segment 65. But the U may also bridge across horizontally adjacent segments 65. The structures of figures 15A, B are then half in the one and half in the other adjacent segment 65. The reinforcing U structure 155 may then be split into two reinforcing J structures. Mounting the segments 65 must then be made such that the elements 65 register so that the tendon 64 can run through the registered duct parts.

Fig. 15C shows an embodiment in which a U tendon 64 runs with its one leg - the left in said figure - in a dedicated duct 64c as shown in figure 7B, and runs with its other leg - the right in fig. 15C - in a working channel 141 shown in figure 14. The U may tangentially yield into the straight channel 141. Likewise, both U legs may run in working channels 141. The mentioned U structure may be provided in a segment 65 or in a pile foot 144 described above and below.

A concrete structure with a U tendon 64, possibly with the reinforcing structure 155 as described here is seen as an own invention. The tendon and then possibly the major extension of the concrete structure may run vertically as shown or may run non-vertical and may run horizontal. The concrete structure may comprise one or multiple pre-cast segments arranged along the length of the tendon.

Fig. 16 shows in separable combination features of an offshore deployment. Ground 7 is the sea bed. 161 is the water level. The foundation pile 11 is the structure below ground 7 = sea bed. It may be formed as described so far. The structure between ground 7 and water level 161 can be seen as connector 12 including a transition piece 112 reaching higher than water level 161. The transition piece 112 may be formed wholly or at least in parts, of concrete, particularly of pre-shaped segments 65 with features as described, possibly tensioned by tendons 64. Concrete adds weight and thus contributes to keeping the structure down and avoiding its working out. The tendons may reach from lower anchors 661 at the pile foot 144 up to upper anchors 66u at the upper end of the transition piece 112. The diameter may change between ground level and water level. It may decrease for decreasing loads from waves and wind driven currents. The pile foot 144 may be made as shown in fig's 13A to D, particularly as foot portion 144.

When the cross section of the pile 11 or of the transition piece 112 changes along its length, the dimensions and/or the number of segments 65 may change appropriately for rendering, when assembled, the targeted dimensions.

Measurement ranges for the foundation and its constituents may be the following:
The subterranean height H of the pile 11 may be more than 10 or 20 or 50 or 100 meters. It may be less than 200 or 100 or 50 meters.

The equivalent or smallest or largest diameter D of the pile 11 at ground 7 level may be more than 2 or 5 or 10 m. It may be less than 30 or 20 or 10 m. The equivalent diameter D may be the diameter of a pile of same height and same volume as the underground parts of the actual pile 11 and of constant circular cross-section.

The ratio H/D of subterranean height H up to ground or up to seabed in offshore constructions to equivalent or smallest or largest diameter D of the pile may be higher than 0.5, 1, 2 or 2.5 or 3 or 5. It may be lower than 20 or 15 or 10 or 8.

In on-shore constructions the subterranean height H may be

$$H = ch * Pr$$

where Pr is the rated or nominal power of the wind turbine and ch is a constant of dimension m/MW (meter per megawatt) and may have a lower limit of 0,5 or 1 or 2 or 4 or 6 m/MW (meter per megawatt) and may have an upper limit of 8 or 10 or 12 m/MW. The equivalent or smallest or largest diameter D may be

$$D = cd * Pr$$

where Pr is the rated power of the wind turbine and cd is a constant of dimension m/MW (meter per megawatt) and may have a lower limit of 0,5 or 1 or 1,5 m/MW and may have an upper limit of 5 or 3 or 2 m/MW.

In off-shore constructions, the height constant ch may be the same for the height H below ground level 7 = sea bed. For the entire height H up to sea level 161 it may have a lower limit of 4 or 8 or 12 m/MW and may have an upper limit of 25 or 20 or 15 m/MW. The diameter constant cd may be the same as in on-shore constructions.

The thickest or average wall thickness of vertical walls 11w may be more than 20 or 30 or 50 cm. It may be below 300 or 200 or 150 or 100 cm. These measures may correspond then to radial widths of possibly used segments 65.

When the pile is formed stepwise by adding rings as shown in figure 9, the ring may have a height more than 0,5 or 1 or 2 m. Its height may be below 10 or 5, 3 or 2 m. These measures may correspond to heights of possibly used segments 65. Lowering in above C2 may then be made for a corresponding length.

When segmentation in circumferential direction is used as indicated by indices $\alpha$, $\beta$, $\gamma$ and $\delta$, the circumference may, for example, be segmented into two, there, four or six or eight or a higher number of segments 65$\alpha$-$\delta$. If - optionally - all segments are formed equal, they then cover, respectively, 90° or 60° or 45° or less of the full circumference. In plan view they may have the shape of a rounded circle sector or of a respective straight chord with appropriately shaped interfacing surfaces amongst them. Their circumferential length then depends on the diameter of the pile 11 to be formed.

The height B of the transition pieces 112 in fig. 11 may be meters, for example more than 1 or 2 or 5 m. It may be less than 40 or 20 or 10 or 5 m. The cross sectional shape may be like that of the underground pile 11. But it may also be different and may change. A geometrical discontinuity may be built, e.g. at ground level. For example, the cross section may converge cone-like in an upward direction as indicated in fig. 11.

The diameter of channels 141 may be more than 20 or 50 or 80 cm. It may be less than 200 or 120 or 100 cm. It may be more than 20 or 30 or 60% of the width W of the segment 65. It may be less than 90 or 70 or 50% of said width. The remaining wall thickness R between the outer wall of a segment 65 and an inner surface of a channel 141 may be more than 5 or 10 or 20 or 30 or 35% of the width W of the segment 65. It may be more than 5 or 10 or 15 cm. It may be less than 30 or 25 or 20 or 15 cm. The distance M between adjacent channels 141 may have the same dimension as the remaining wall thickness R. It may be more than 0,3 or 0,5 or 1 or 2 times the diameter D of the channels. It may be less than 5 or 3 or 1 times said diameter D.

The distance of neighboring tendons 64 in circumferential direction of the pile 11 may be more than 30 or 80 or 100 or 150 cm. It may be less than 300 or 250 or 200 or 150 cm.

Although so far the foundation has been described as a wind turbine foundation, it may also be used for other superstructures, possibly with similar constraints, such as bridge pylons, chimneys, towers, radio masts or the like. Then, instead for wind turbines, the above teachings apply in the same manner to the mentioned other fields of use.

Features described in this specification and/or in the claims and/or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Descriptions of a method or procedure or a method step or a procedural step shall be understood also as description of means for implementing the method or procedure or method step or procedural step and/or possibly also as a data carrier holding program instructions of executable code adapted for implementing the method or procedure or method step or procedural step, and vice versa.

List of reference signs

| | |
|---|---|
| 1 | wind turbine |
| 2 | tower |
| 3 | yaw controller |
| 4 | hub, generator |
| 5 | rotor blades |
| 6 | foundation |
| 7 | ground |
| 8 | ground water level |
| 9 | surrounding soil |
| 10 | wind turbine foundation |
| 11 | pile |
| 12 | connector |
| 13 | threaded bolts |
| 14 | holding structure |
| 15 | connecting structure |
| 16 | pile region |
| 21 | cavity |
| 22i | ingress opening |
| 22v | vent opening |
| 31 | inspection channel |
| 61 | wall |
| 62 | bottom |
| 63 | center line CL |
| 64 | tendon |
| 64c | tendon duct |
| 65 | wall |
| 65a-f | segments |
| 65α-δ | segments |
| 65o,v | side walls |
| 66u,l | anchor |
| 67 | tensioning structure |
| 68 | tongue and groove structure |
| 69u, l | subassemblies |
| 91 | guidance |
| 92 | auxiliary structure |
| 93 | digging tool |
| 93a | grinder |
| 101 | spill ring |
| 102 | circumferential duct |
| 103 | nozzles |
| 104 | supply duct |
| 105 | fluid connector |
| 106 | bulk material |
| 110 | tendon |
| 111 | anchor |
| 112 | transition piece |
| 113 | wall |
| 114 | space |
| 120 | flange |
| 121 | beam |
| 122 | cavity |
| 123 | hook |
| 124 | nut |
| 125 | nut and bolt |
| 130 | oblique plate |
| 131 | reinforcing plate |
| 132 | cutting edge |
| 133 | reinforcing plate |
| 134 | reinforcing plate |
| 135 | reinforcing plate |
| 137 | tool |
| 138 | abutment |

| 139 | tool head |
| 141 | channel |
| 142 | remainder |
| 144 | pile foot |
| 145 | ring space |
| 146 | land portion |
| 147 | filling material |
| 148 | overcut |
| 151 | plate shaped elements |
| 152 | hole |
| 153 | rod elements |
| 154 | ribs |
| 155 | reinforcing structure |
| 156 | channel |
| 161 | water level |

**Claims**

1. Foundation (10) for a wind turbine (1), comprising

   a single vertical subterranean pile (11) formed at least partially with one or more precast segments (65) that comprise reinforced concrete, a plurality of tendons (64) each spanning in circumferential or in vertical direction of the foundation across two or more segments (65), and on its top a connector (12) for a superstructure, particularly a wind turbine component (2-4), particularly for a wind turbine tower component or for a yaw controller.

2. Foundation according to claim 1, wherein the connector (12) lies subterranean or on ground level or above-ground.

3. Foundation according to claim 1 or 2, wherein the pile (11) comprises a multitude of channels (141) extending vertically from the pile foot (144) towards an upper pile portion and preferably up to the pile top, said channels (141) being dimensioned and arranged for allowing during construction the lowering of a material removing tool (137, 139) through them down to the pile foot (144) and for removing material through them in an upward direction.

4. Foundation according to one of the preceding claims, wherein the equivalent diameter (D) of the cross sectional shape of the pile (11) does not exceed 20% or 15% or 10% or 6% of the hub height (H) above ground of the planned wind turbine.

5. Foundation according to one of the claims 1 to 4, wherein the pile (11) comprises a wall structure (11w) surrounding at least a first cavity (21), the first cavity (21) possibly being filled with excavated material and/or water and/or being used as storage, wherein

the first cavity (21) may have one or two or multiple openings towards the surrounding soil (9).

6. Foundation according to one of the preceding claims, wherein the connector (12) comprises an above-ground continuation (112) of the pile (11) extending in a vertical direction and a connecting structure for a wind turbine tower (2) or a yaw controller or a hub on its top.

7. Foundation according to one of the preceding claims, wherein the pile (11) comprises at least in parts portions formed by first mounting reinforcing steel in situ, possibly mounting formwork and then casting uncured concrete onto it.

8. Foundation according to one of the preceding claims, wherein the pile (11) comprises multiple circumferentially arranged segments ($65\alpha$-$\delta$), preferably arc segments, made of reinforced concrete, wherein said segments may have horizontally matching tongue and groove structures and may be precast.

9. Foundation according to one of the preceding claims, wherein the pile (11) comprises multiple vertically stacked rings or segments (65a-f), preferably arc segments, made of reinforced concrete, wherein said segments may have vertically matching tongue and groove structures (68) and may be precast.

10. Foundation according to claim 9, comprising for the concrete structure a vertically acting post-tensioned structure, preferably comprising tendons (64) and respective upper and lower anchors (66u, 661), wherein the tendons may run in tendon ducts (64c) inside the concrete structure or may run outside the concrete structure, and wherein the tendons (64) may comprise upper tendons (64u) with respective upper and lower anchors (66uu, 66ul) for post-tensioning an upper pile portion, and lower tendons (641) with respective upper and lower anchors (66lu, 6611) for post-tensioning a lower pile portion, and wherein tendons (64) may reach upwardly beyond the concrete structure into connector (12).

11. Foundation according to one of the preceding claims, wherein the pile (11) has shear key portions on its outer vertical surface.

12. Foundation according to one of the preceding claims, wherein the lower end portion of the pile (11) comprises a spilling structure (101) for spilling, during pile formation, water downward for supporting excavation work, wherein the spilling structure (101) may be formed as a ring segment (65a) and may have internal duct structures (102, 104) and downwardly pointing nozzles (103) cast into the ring segment material (106) that may be concrete.

13. Method for forming a wind turbine foundation, comprising the steps of

deploying an underground pile (11) with reinforced concrete segments (65),
post-tensioning said concrete segments (65), and
forming a connector (12) on the top of the pile (11),
wherein deploying the underground pile (11) may comprise
forming a stationary ring-shaped guidance (91) with an inner measure (Gi) matching an outer measure of the pile (11),
disposing a lowerable first ring portion (65a) inside said guidance (91),
and then repeatedly

- removing soil below the first ring portion
- lowering the first ring portion and possible ring structures above it, and
- disposing a further lowerable ring portion (65b-f) on top of the already disposed lowerable ring portions.

14. A wind turbine (1) comprising

a foundation (10) according to one of the preceding claims 1 to 15, and
a wind turbine upper structure connected to the connector (12).

15. A pile foot (144) comprising

an elongated body shaped to follow along its length the perimeter of the lower end of a pile of a foundation (10) to be constructed,
one or more lower cutting edge portion (132o, 132i) formed by metal or iron or steel plates (131) of which two with a vertical extension meet at a lower vertex in V shape, and
at an upper body portion a surface or at least a surface portion shaped to match a lower surface of a lowest pile ring (51) or pile segment (65a).

# Fig. 1

EP 4 273 326 A1

**Fig. 2**

20

# Fig. 3

# Fig. 4

# Fig. 5

## Fig. 6A

61
66u
65f
65e
64
64
66u  63
65d
65c
65b
65a
CL
66l
21
62

## Fig. 6B

61
66u
63
65 a-f
64
21
CL
66l

# Fig. 6

# Fig. 6

**J**

**K**

**Fig. 7A**

**Fig. 7C**

## Fig. 7B

Fig. 8

# Fig. 9

# Fig. 10

A

B

Fig. 11A

**Fig. 12**

# Fig. 13

# Fig. 13 D

# Fig. 14

**A**

**B**

**Fig. 15**

**A**

Wu

64

64 65

151 152 152 64c 154 153

**B**

155

64 64

151 152 156 153

**C**

64 141 65

151 153

155

## Fig. 16

## Fig. 17 - Prior art

Europäisches
Patentamt

European
Patent Office

Office européen
des brevets

# EUROPEAN SEARCH REPORT

Application Number

EP 22 17 1946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 700 750 A1 (RWE POWER AG [DE]) 26 February 2014 (2014-02-26) | 1,2,4,5, 7,9,10, 14 | INV. E02B17/00 F03D13/20 F03D13/25 |
| A | * paragraphs [0042] – [0045]; figure 1 * | 3,6,8, 11,12 | |
| X | US 2015/252580 A1 (HANGEL JØRGEN [DK]) 10 September 2015 (2015-09-10) | 1-6,11, 14 | |
| A | * figures 1,3,5,12,13 * | 7-10,12 | |
| X | CN 113 513 038 A (SHANGHAI ELECTRIC WIND POWER GROUP CO LTD) 19 October 2021 (2021-10-19) | 1,2,4-6, 9,14 | |
| A | * figures 1,3 * | 3,7,8, 10-12 | |

TECHNICAL FIELDS
SEARCHED (IPC)

E02B
F03D
E02C
E02D
E04H

The present search report has been drawn up for all claims

| Place of search | Date of completion of the search | Examiner |
|---|---|---|
| The Hague | 13 October 2022 | Flygare, Esa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                      

& : member of the same patent family, corresponding document

EPO FORM 1503 03.82 (P04C01)

Europäisches
Patentamt

European
Patent Office

Office européen
des brevets

Application Number

EP 22 17 1946

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-12, 14**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
### SHEET B

**Application Number**

EP 22 17 1946

The Search Division considers that the present European patent application does not comply with the requirements of unity of invention and relates to several inventions or groups of inventions, namely:

**1. claims: 1-12, 14**

     **Foundation of segments**

          ---

**2. claim: 13**

     **Mounting method**

          ---

**3. claim: 15**

     **Pile foot**

          ---

## ANNEX TO THE EUROPEAN SEARCH REPORT
## ON EUROPEAN PATENT APPLICATION NO.

**EP 22 17 1946**

This annex lists the patent family members relating to the patent documents cited in the above-mentioned European search report.
The members are as contained in the European Patent Office EDP file on
The European Patent Office is in no way liable for these particulars which are merely given for the purpose of information.

**13-10-2022**

| Patent document cited in search report | | Publication date | Patent family member(s) | | Publication date |
|---|---|---|---|---|---|
| EP 2700750 | A1 | 26-02-2014 | DE 102012014832 | A1 | 30-01-2014 |
| | | | DK 2700750 | T3 | 27-04-2015 |
| | | | EP 2700750 | A1 | 26-02-2014 |
| US 2015252580 | A1 | 10-09-2015 | BR 112012019203 | A2 | 27-03-2018 |
| | | | CA 2787932 | A1 | 04-08-2011 |
| | | | CN 102834572 | A | 19-12-2012 |
| | | | CN 104595126 | A | 06-05-2015 |
| | | | DK 2531674 | T3 | 27-02-2017 |
| | | | EP 2531674 | A1 | 12-12-2012 |
| | | | US 2012311948 | A1 | 13-12-2012 |
| | | | US 2015252580 | A1 | 10-09-2015 |
| | | | WO 2011091799 | A1 | 04-08-2011 |
| CN 113513038 | A | 19-10-2021 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3333324 A1
- WO 2012146350 A2
- WO 2017045907 A1
- WO 2017203023 A1
- WO 2020207903 A1

- CA 2998534 A1
- US 2374624 A
- US 5586417 A
- EP 2500473 A1
- EP 2930275 A1